# EUROPÄISCHE PATENTSCHRIFT

(11) **EP 2 909 004 B1**
(45) Veröffentlichungstag und Bekanntmachung des Hinweises auf die Patenterteilung: **23.01.2019**
(21) Anmeldenummer: 12775017.2
(22) Anmeldetag: 17.10.2012
(51) Int. Cl.: B29C 65/00, B64C 1/06, F16B 5/01, F16B 11/00, G01N 3/08, G01L 5/00

(54) **VERFAHREN UND SYSTEM ZUM EINSETZEN EINES EINSATZELEMENTS IN EIN PANEELPRODUKT**
METHOD ANS SYSTEM FOR INSERTING AN INSERT ELEMENT IN A PANEL
PROCÉDÉ ET SYSTÈME D'IMPLANTATION D'UN ÉLÉMENT DANS UN PANNEAU

(43) Veröffentlichungstag der Anmeldung: 26.08.2015
(73) Patentinhaber: RUAG Schweiz AG, 6032 Emmen (CH)
(72) Erfinder: KÖGL, Stefan, CH-8157 Dielsdorf (CH)
(74) Vertreter: Rentsch Partner AG
(86) Internationale Anmeldenummer: PCT/EP2012/070549
(87) Internationale Veröffentlichungsnummer: WO 2014/060027

(56) Entgegenhaltungen:
- EP-A1- 2 172 318
- WO-A1-2010/040499
- DE-A1- 3 528 869
- DE-A1- 10 233 259
- DE-A1- 19 829 478
- DE-A1-102007 021 341
- US-A- 5 240 543
- US-A1- 2009 326 702

## Beschreibung

Die vorliegende Erfindung betrifft eine Abdicht- und Positioniereinrichtung, ein Verfahren und ein System zum Einsetzen eines Einsatzelements in ein Paneelprodukt, und einen Montagehilfswerkzeugsatz zur Verwendung in dem Verfahren bzw. System.

Die betroffenen Paneelprodukte sind üblicherweise in Leichtbauweise hergestellt. Dabei umfasst ein Grundmaterial des Paneelprodukts in einer ersten Ausführungsform eine Vielzahl von Gerüstelementen in einer voneinander weitmöglich beabstandeten Anordnung oder in einer zweiten Ausführungsform eine Vielzahl von Wabenkernen mit Wabenkernwänden, wobei die Wabenkerne in der Regel in einem Querschnitt parallel zu einer Oberfläche des Grundmaterials sechseckig und die Wabenkernwände im Wesentlichen senkrecht zu der Oberfläche ausgebildet sind und an bzw. unter den beidseitigen Oberflächen jeweils eine auf den Wabenkernwänden aufliegende Deckschicht vorgesehen ist. Zwischen den Gerüstelementen bzw. den Wabenkernwänden verbleibt möglichst viel freier Raum und durch die Gerüstelemente bzw. die Wabenkernwände wird ein den freien Raum umfassendes, großvolumiges Paneelprodukt aufgespannt. Die Anordnung der Gerüstelemente bzw. der Wabenkernwände gewährleistet eine ausreichende Steifigkeit des Paneelprodukts und ist mit dahingehend optimiert, den freien Raum und das Volumen des Paneelprodukts zu maximieren, eine geforderte Steifigkeit zu gewährleisten und das Gewicht des Paneelprodukts zu minimieren.

Damit in einer Anwendung eines derartigen Paneelprodukts ein anderes Bauteil bzw. andere Baugruppen an dem Paneelprodukt befestigt werden können, etwa ohne in der ersten Ausführungsform die Gerüstelemente zu beschädigen oder um in der zweiten Ausführungsform die zu befestigende Baugruppe sicher mit der Deckschichten zu verankern, sind Einsatzelemente zum Einsetzen in jeweilige Vertiefungen in der Paneeloberfläche vorgesehen und kommerziell verfügbar. Die Einsatzelemente sind so ausgestaltet, dass daran bzw. darin ein Befestigungsteil zum Befestigen des Bauteils bzw. der Baugruppe an dem Paneelprodukt eingreifen kann, ähnlich wie ein Dübel in einer Wand, in dem eine Schraube als Befestigungsteil eingreifen kann. Das Befestigungsteil kann etwa eine Schraube oder ein Haken sein. Bisher werden die Einsatzelemente manuell in die Vertiefungen eingesetzt und darin zum dauerhaften Verankern eingeschäumt. Dieser Vorgang ist arbeits-, zeit- und kostenintensiv, im Ergebnis nur bedingt im Rahmen einer üblichen Reproduzierbarkeit eines manuell ausgeführten Prozesses wiederholbar, und behaftet mit einem Risiko, dass eine Lastfestigkeit einer Verankerung des Einsatzelements in dem Paneelprodukt eine vorbestimmte Lastfestigkeit nicht erzielt. Wenn ein Einsatzelement mit nicht ausreichender Lastfestigkeit eingesetzt ist, muss es entfernt werden, die Ausnehmung muss erneut ausgehoben werden und ein neues Einsatzelement muss manuell in die ausgehobene Ausnehmung eingesetzt und eingeschäumt werden. In einem ungünstigen Fall wird ein Paneelprodukt durch ein mit unzureichender Lastfestigkeit eingesetztes Einsatzelement unbrauchbar.

Beispielsweise offenbart die DE 10 2007 021 341 A1 ein Verschlusselement zur Herstellung eines Befestigungspunkts in einer Leichtbauplatte. Es wird vorgeschlagen, das Verschlusselement mit einer Membran, die durch einen Kreuzschlitz als selbsttätig schließendes Ventil ausgebildet ist, und mit einer die Membran umschließenden Fassung auszubilden. Das Verschlusselement wird in ein Loch einer Deckplatte der Leichtbauplatte eingesetzt, und durch das selbsttätig schließende Ventil wird eine aushärtende Masse in einen Hohlraum der Leichtbauplatte eingebracht. Das Verschlusselement verhindert einen Austritt der aushärtenden Masse, auch wenn diese expandiert. Nach dem Aushärten lässt sich eine Schraube durch das Verschlusselement in die ausgehärtete Masse einschrauben.

Die US 2009/0326702 A1 offenbart die Installation eines Einsatzelements in einer Einführungsöffnung eines Paneels oder einer anderen Struktur. Dazu wird Vergussmasse in einen Hohlraum, welcher das Einsatzelement umgibt, durch eine Einfüllöffnung im Einsatz eingespritzt bis Vergussmasse über eine andere Öffnung ausläuft.

Die EP 2 172 318 A1 offenbart ein Bearbeitungszentrum zum Bearbeiten von wabenartigen Leichtbauplatten, welches mehrere voneinander unabhängige Bearbeitungsaggregate zum spezifischen Bearbeiten der Leichtbauplatten aufweist. Dabei ist ein Bearbeitungsaggregat zum Setzen von Dübeln in zuvor eingebrachte Löcher vorgesehen. Ein weiteres Bearbeitungsaggregat ist zum Verkleben der eingesetzten Dübel vorgesehen.

Die DE 35 28 869 A1 offenbart eine Vorrichtung zum automatischen Setzen von durch Vergießen in Leichtbauplatten einzufügenden Buchsen.

Es ist eine Aufgabe der Erfindung ein Verfahren und ein System bereitzustellen, welche die Nachteile der bekannten Verfahren und Systeme beheben oder reduzieren.

Aufgabe der Erfindung ist es daher, in der Leichtbau-Technologie ein Verfahren und ein System zum Herstellen einer Paneelproduktvorrichtung und zum Einsetzen eines Einsatzelements in eine (Vertiefung in der) Oberfläche der Paneelproduktvorrichtung, ein Montagehilfswerkzeugsatz mit einer Abdeck- und Positioniereinrichtung und einer Verbindungseinrichtung zum Verbinden der Abdeck- und Positioniereinrichtung mit dem Einsatzelement (alle zur Verwendung in dem vorgenannten Verfahren bzw. System) sowie ein Verfahren und ein System zum Überprüfen der Lastbeständigkeit der Verbindung zwischen dem Einsatzelement und der (Vertiefung in der) Oberfläche des Paneelprodukts, bereitzustellen, die es ermöglichen, ein Einsatzelement reproduzierbar zuverlässig, lastbeständig und mit garantierbarer Lastbeständigkeit, der Leichtbauweise entsprechend, mit bzw. in der Paneeloberfläche zu verankern.

Ausserdem ist es eine Aufgabe der Erfindung, mit dem aufgabengemäßen Verfahren bzw. System die Herstellung von Paneelproduktvorrichtungen in Serienfertigung zu ermöglichen und dadurch einen kostengünstigen Einsatz bzw. Verwendung in einem Luft- bzw. Raumfahrzeug zu ermöglichen.

Die Lösung dieser Aufgabe erfolgt erfindungsgemäss für das Verfahren bzw. das System zum Herstellen der Paneelproduktvorrichtung durch die Merkmale des Anspruchs 1 bzw. 2, für die Abdeck- und Positioniereinrichtung durch die Merkmale des Anspruchs 6 und für den Montagehilfswerkzeugsatz durch die Merkmale des Anspruchs 15.

Vorteilhafte Weiterbildungen der beanspruchten System, Vorrichtungen und Verfahren werden durch die entsprechenden abhängigen Ansprüche definiert.

Wie beansprucht, wird gemäß einem ersten Aspekt der Erfindung ein Verfahren bereitgestellt zum Herstellen einer Paneelproduktvorrichtung, wobei ein Paneelvorprodukt mit mindestens einer in einer Paneeloberfläche ausgebildeten Ausnehmung mit einer Begrenzung und mindestens einem zum Verankern in einer der Ausnehmungen vorgesehenen Einsatzelement bereitgestellt ist. Erfindungsgemäß umfasst das Verfahren folgende Schritte: automatisiertes Einsetzen des Einsatzelements in die Ausnehmung des Paneelvorprodukts und automatisiertes Befüllen eines Zwischenraums zwischen dem Einsatzelement und der Begrenzung der Ausnehmung mit einem aushärtbaren bzw. aushärtenden Füllfluid. Das Befüllen des Zwischenraums mit dem aushärtbaren Füllfluid bewirkt eine zuverlässige Verankerung des Einsatzelements in der Ausnehmung des Paneelvorprodukts. Das automatisierte Einsetzen und Befüllen ermöglicht, dass das Verfahren reproduzierbar und mit vorgegebener Qualität bezüglich der Lastfestigkeit des zu verankernden Einsatzelements ausgeführt werden kann.

Das Paneelvorprodukt kann in Leichtbauweise hergestellt sein. Die durch das Verfahren hergestellte Paneelproduktvorrichtung kann in einem Luft- bzw. Raumfahrzeug eingebaut sein bzw. verwendet werden.

Das Verfahren kann das Aushärten bzw. Aushärtenlassen des in den Zwischenraum eingefüllten Füllfluids umfassen. Durch das Aushärten des Füllfluids wird eine festsitzende und dauerhafte Verankerung des Einsatzelements in der Ausnehmung des Paneelvorprodukts erzielt.

Das Füllfluid kann ein schaumartiges oder klebstoffartig-viskoses Fluid sein. Ferner kann das Füllfluid durch Bestrahlen mit elektromagnetischer Strahlung, etwa Licht oder UV-Strahlung, durch einen thermischen Prozess mit verfahrensabhängig steuerbarer Temperaturerhöhung oder im Rahmen eines Warteprozesses mit einer vorbestimmten Warte- bzw. Aushärtzeit aushärtbar sein. Insbesondere bei Verwendung eines schaumartigen Fluids ist das Verfahren zum Einsatz in der Leichtbau-Technologie besonders geeignet.

Der Schritt des Befüllens des Zwischenraums kann das Bereitstellen des Füllfluids in einer während des Befüllens verfahrensabhängig steuerbaren Menge umfassen. Durch geeignete Wahl der Menge wird nur so viel Füllfluid verbraucht, wie zum Befüllen des Zwischenraums erforderlich ist und nicht mehr. Dadurch werden Material (Füllfluid) und Kosten eingespart.

Der Schritt des Bereitstellens des Füllfluids in der verfahrensabhängig steuerbaren Menge kann noch folgendes umfassen: Abdichten des Zwischenraums und Bereitstellen einer Einfüllöffnung zum Befüllen des Zwischenraums mit dem Füllfluid und einer Auslassöffnung zum Auslassen überschüssigen Füllfluids aus dem Zwischenraum, und Befüllen des Zwischenraums mit dem Füllfluid durch die Einfüllöffnung bis der Zwischenraum im Wesentlichen vollständig mit dem Füllfluid ausgefüllt ist. Dadurch wird die Zuverlässigkeit der Verankerung des Einsatzelements in dem Paneelvorprodukt erhöht.

In dem Schritt des Befüllens des Zwischenraums kann das Befüllen des Zwischenraums beendet werden, wenn Füllfluid durch die Auslassöffnung aus dem Zwischenraum austritt. Dabei kann der Schritt des Befüllens des Zwischenraums das Überwachen der Auslassöffnung mittels einer Sensoreinrichtung umfassen, wobei die Sensoreinrichtung dazu ausgebildet sein kann, ein Signal auszugeben, wenn Füllfluid durch die Auslassöffnung austritt. Dabei kann infolge des Ausgebens des Signal von der Sensoreinrichtung das Befüllen des Zwischenraums mit dem Füllfluid beendet werden. Auch dadurch können Material (Füllfluid) und Kosten eingespart werden.

Alternativ kann der Schritt des Befüllens des Zwischenraums das Beenden des Befüllens des Zwischenraums umfassen, wenn eine vorbestimmte Menge des Füllfluids durch die Einfüllöffnung eingefüllt worden ist. Dabei kann der Schritt des Beenden des Befüllens des Zwischenraums noch das Steuern des Einfüllens der vorbestimmten Menge des Füllfluids durch Überwachen einer Einfüllzeitdauer oder durch Überwachen einer Massen- bzw. Gewichtszunahme des Paneelprodukts durch das eingefüllte Füllfluid umfassen. Auch dadurch können Material (Füllfluid) und Kosten eingespart werden.

Das Einsatzelement kann vor dem Einsetzen in die Ausnehmung mit einer Positionier- und Abdicht- und Positioniereinrichtung lösbar verbunden werden. Die Positionier- und Abdicht- und Positioniereinrichtung kann eine Unterseite, die sich durch die Einrichtung hindurch erstreckende Einfüllöffnung und die sich durch die Einrichtung hindurch erstreckende Auslassöffnung umfassen, und das Einsatzelement kann an der Unterseite der Einrichtung lösbar befestigt werden. Dies ermöglicht ein genaues Positionieren des Einsatzelements in der Ausnehmung und eine Abdichtung des Zwischenraums bzw. der Ausnehmung in Bezug auf das in den Zwischenraum einzufüllende Füllfluid.

Nach dem Aushärten des in den Zwischenraum eingefüllten Füllfluids kann automatisiert überprüft werden, ob eine vorbestimmte Lastfestigkeit des in dem Paneelvorprodukt verankerten Einsatzelements erzielt worden ist. Dabei kann zum Überprüfen der Lastfestigkeit das Einsatzelement mit einer Prüfzugkraft beaufschlagt werden, wobei die Prüfzugkraft im Wesentlichen senkrecht zu der Paneeloberfläche und von der Paneeloberfläche weg gerichtet sein kann, der vorbestimmten Verbindungsfestigkeit eine vorbestimmte Prüfzugkraft zugeordnet sein kann, und die Prüfzugkraft beim Beaufschlagen zumindest bis auf die vorbestimmte Prüfzugkraft erhöht werden kann. Das automatisierte Überprüfen der Lastfestigkeit ermöglicht es, eine gleichbleibend hohe Qualität und Zuverlässigkeit der hergestellten Paneelproduktvorrichtung zu gewährleisten.

Wie ebenfalls beansprucht, wird gemäß einem zweiten Aspekt der Erfindung ein System zum Herstellen einer Paneelproduktvorrichtung bereitgestellt, wobei ein Paneelvorprodukt mit mindestens einer in einer Paneeloberfläche ausgebildeten Ausnehmung mit einer Begrenzung und mindestens einem zum Verankern in mindestens einer der Ausnehmungen vorgesehenen Einsatzelement bereitgestellt ist. Das System umfasst Mittel zum automatisierten Einsetzen des Einsatzelements in die Ausnehmung des Paneelvorprodukts und Mittel zum automatisierten Befüllen eines Zwischenraums zwischen dem Einsatzelement und der Begrenzung der Ausnehmung mit einem aushärtbaren bzw. aushärtenden Füllfluid. Das Befüllen des Zwischenraums mit dem aushärtbaren Füllfluid bewirkt eine zuverlässige Verankerung des Einsatzelements in der Ausnehmung des Paneelvorprodukts. Mittels des Systems zum automatisierten Einsetzen und Befüllen kann das Verfahren reproduzierbar und mit vorgegebener Qualität bezüglich der Lastfestigkeit des zu verankernden Einsatzelements ausgeführt und können Paneelproduktvorrichtungen mit vorgegebener Lastfestigkeitsqualität der Einsatzelemente in Serienfertigung hergestellt werden.

Das System kann ferner Mittel zum Aushärten bzw. Aushärtenlassen des in den Zwischenraum eingefüllten Füllfluids umfassen. Durch das Aushärten des Füllfluids wird eine festsitzende und dauerhafte Verankerung des Einsatzelements in der Ausnehmung des Paneelvorprodukts erzielt.

Die automatisierten Befüllmittel umfassen eine Abdicht- und Positioniereinrichtung mit einer Einfüllöffnung zum Einfüllen des Füllfluids in den Zwischenraum und einer Auslassöffnung zum Auslassen überschüssigen Füllmittels aus dem Zwischenraum. Die Abdicht- und Positioniereinrichtung kann so ausgebildet sein, dass sie mittels einer Greifeinrichtung auf die Paneeloberfläche aufgelegt werden kann. Die Abdicht- und Positioniereinrichtung umfasst eine Unterseite, die sich durch die Abdicht- und Positioniereinrichtung hindurch erstreckende Einfüllöffnung und die sich durch die Abdicht- und Positioniereinrichtung hindurch erstreckende Auslassöffnung. Auch kann die Abdicht- und Positioniereinrichtung eine Unterseite aufweisen und so ausgebildet sein, dass das Einsatzelement an der Unterseite lösbar befestigt werden kann. Dies ermöglicht ein genaues Positionieren des Einsatzelements in der Ausnehmung und eine Abdichtung des Zwischenraums bzw. der Ausnehmung bezüglich des in den Zwischenraum einzufüllenden Füllfluids.

Die Einfüllöffnung kann in der Abdicht- und Positioniereinrichtung an einer Einfüllposition ausgebildet sein, die so gewählt ist, dass die Einfüllöffnung beim Aufliegen der Abdicht- und Positioniereinrichtung auf der Paneeloberfläche in Fluidkommunikation mit einem ersten Teilraumbereich des Zwischenraums ist. Dabei kann die Auslassöffnung in der Abdicht- und Positioniereinrichtung an einer Auslassposition ausgebildet sein, die so gewählt ist, dass die Auslassöffnung beim Aufliegen der Abdicht- und Positioniereinrichtung auf der Paneeloberfläche in Fluidkommunikation mit einem zweiten Teilraumbereich des Zwischenraums ist. Auch kann dabei der zweite Teilraumbereich mit dem ersten Teilraumbereich in einer Fluidkommunikation mit Fluidpfaden durch den Zwischenraum stehen, wobei die Fluidpfade im Wesentlichen alle zum ersten und zweiten Teilraumbereich komplementären Teilraumbereiche des Zwischenraums erreichen. Durch eine derartige Anordnung der Einfüll- und Auslassöffnung wird zuverlässig ein im Wesentlichen vollständiges Ausfüllen des Zwischenraums mit dem Füllfluid erzielt.

Die Abdicht- und Positioniereinrichtung umfasst einen Mittelabschnitt, an dessen Unterseite das Einsatzelement lösbar befestigt werden kann, und einen den Mittelabschnitt umringenden Randabschnitt, in dem die Einfüllöffnung und die Auslassöffnung ausgebildet sind. Dabei kann der Mittelabschnitt der Abdicht- und Positioniereinrichtung zwischen der Einfüllöffnung und der Auslassöffnung angeordnet sein. Diese Ausbildung der Abdicht- und Positioniereinrichtung mit der Einfüll- und Auslassöffnung trägt ebenfalls bei zum zuverlässigen und im Wesentlichen vollständigen Ausfüllen des Zwischenraums mit dem Füllfluid.

Die Abdicht- und Positioniereinrichtung kann so ausgebildet sein, dass beim Aufliegen auf der Paneeloberfläche eine bezüglich des Füllfluids fluiddichte Abdichtung zwischen der Paneeloberfläche und der Abdicht- und Positioniereinrichtung ausgebildet ist. Dadurch wird während des Befüllens das Austreten von Füllfluid aus dem Zwischenraum verhindert. Auch wird dadurch eine Barriere bzw. einen Gegendruck bezüglich des Austretens von eingefülltem Füllfluid bereitgestellt, so dass das Füllfluid den Zwischenraum im Wesentlichen vollständig ausfüllen kann.

Von der Unterseite der Abdicht- und Positioniereinrichtung kann der Mittelabschnitt bezüglich des Randabschnitts um eine vorbestimmte Vorsprungshöhe vorspringen. Dabei kann die Vorsprungshöhe so gewählt sein, dass wenn die Unterseite des Randabschnitts auf der Paneeloberfläche aufliegt, das an der Unterseite des Mittelabschnitts befestigte Einsetzelement in der gewünschten vorbestimmten Position in der Ausnehmung positioniert ist. Die Vorsprunghöhe des Mittelabschnitts bewirkt, dass das Einsatzelement zuverlässig nicht mit seiner Oberseite aus der Ausnehmung über die Paneeloberfläche bzw. die dadurch definierte Ebene hinausragt.

Auf der Unterseite der Abdicht- und Positioniereinrichtung kann, insbesondere im Randabschnitt der Abdicht- und Positioniereinrichtung, ein vorzugsweise schwach haftender Klebefilm aufgebracht sein. Der Klebefilm bewirkt, dass die Abdicht- und Positioniereinrichtung in ihrem auf die Paneeloberfläche aufgesetzten Zustand bzw. während des Befüllens des Zwischenraums mit dem Füllfluid nicht auf der Paneeloberfläche verrutscht.

Die Abdeck- und Positioniereinrichtung kann aus einem transparenten Material, etwa C-PET oder PMMA, hergestellt sein. Dadurch kann der Vorgang des Einfüllens des Füllfluids in den Zwischenraum bei Bedarf optisch bzw. visuell durch die Einrichtung hindurch beobachtet werden.

Das System kann auch eine Verbindungseinrichtung zum lösbaren Verbinden der Abdicht- und Positioniereinrichtung mit dem Einsatzelement umfassen. Die Verbindungseinrichtung kann betätigbar sein zum Verbinden der Abdicht- und Positioniereinrichtung mit und zum Lösen der Abdicht- und Positioniereinrichtung von dem Einsatzelement. Die Verbindungseinrichtung kann einen Griffabschnitt aufweisen, der so ausgebildet sein kann, dass er von einer Verbindungsgreifeinrichtung lösbar ergriffen werden kann. Diese Ausgestaltungen tragen dazu bei, dass ein mit dem System realisiertes Verfahren relativ leicht automatisierbar ist und das Einsatzelement beim Einsetzen in die Ausnehmung mit guter Reproduzierbarkeit positionsgenau in der Ausnehmung positioniert werden kann.

Die Abdicht- und Positioniereinrichtung kann eine Öffnung mit einem, etwa nahe der Oberfläche, umlaufenden oder mit abschnittsweise umlaufenden Widerhaken aufweisen und zum automatisierten Hindurchführen der Verbindungseinrichtung ausgebildet sein. Die Verbindungseinrichtung kann als eine Spezialschraube ausgebildet sein. Die Spezialschraube kann einen Schraubenkragen aufweisen, der beim Hindurchführen der Schraube durch die Öffnung mit dem bzw. den Widerhaken so zusammen wirkt, dass der Kragen beim Hindurchführen an den Widerhaken vorbei gleitet und beim Zurückziehen der Schraube mit den Widerhaken in Eingriff kommt.

Die Verbindungseinrichtung (etwa die Spezialschraube) kann an einem Einrichtungskopf (etwa einem Schraubenkopf) eine oder mehrere Markierungen aufweisen. Insbesondere können eine zentrische Markierung auf einer Oberseite eines Schraubenkopfes und/oder eine oder mehrere auf einem Kreis auf dem Schraubenkopf angebrachte, voneinander unterscheidbare Markierungen, vorgesehen sein. Die zentrische Markierung kann etwa bei einer Verwendung optischer Abbildungseinrichtungen zur Positionsbestimmung der Verbindungseinrichtung bzw. eines die Verbindungseinrichtung, die Abdeck- und Positioniereinrichtung und das Einsatzelement umfassenden Verbundelements dienen. Die eine oder mehreren auf dem Kreis auf dem Schraubenkopf angebrachten, voneinander unterscheidbare Markierungen können etwa bei einer Verwendung optischer Abbildungseinrichtungen zur Bestimmung der Drehwinkelorientierung der Verbindungseinrichtung bzw. des Verbundelements dienen.

Die Abdicht- und Positioniereinrichtung kann eine oder mehrere, etwa an ihrem Umfang angeordnete, Umfangsmarkierungen, etwa in der Form von Einbuchtungen, aufweisen. Diese Umfangsmarkierungen können dazu dienen, die Abdicht- und Positioniereinrichtung in eine vorbestimmte, reproduzierbare Drehposition zu bringen in Bezug auf das mit der Abdicht- und Positioniereinrichtung zu verbindende Einsatzelement. Die Drehposition kann so gewählt sein, dass die Einfüll- und die Auslassöffnung in der Abdicht- und Positioniereinrichtung fluchtend mit entsprechenden Einfüll- und Auslassdurchlöchern des Einsatzelements positioniert angeordnet sind.

Eine Oberfläche des Einsatzelements kann größer sein als der Mittelabschnitt der Abdicht- und Positioniereinrichtung und kann deren Randabschnitt teilweise oder ganz überdecken, wenn das Einsatzelement und die Abdicht- und Positioniereinrichtung miteinander verbunden sind. Dazu weist auch das Einsatzelement an seiner Oberseite in seiner Oberfläche ausgebildete Durchlöcher auf, etwa die oben genannten Einfüll- und Auslassdurchlöcher. In diesem Fall ist beim Herstellen der Verbindung des Einsatzelements mit der Abdicht- und Positioniereinrichtung darauf zu achten, dass das Einfülldurchloch und das Auslassdurchloch in der Oberseite des Einsatzelements mit der Einfüllöffnung und der Auslassöffnung in der Abdicht- und Positioniereinrichtung fluchten. Die vorgenannten Umfangsmarkierungen an der Abdicht- und Positioniereinrichtung können dazu dienen, das Fluchten der Öffnungen mit den Durchlöchern leichter bewerkstelligen.

Das Einsatzelement und die Abdicht- und Positioniereinrichtung können so ausgebildet werden, dass sie mittels einer Verbindungseinrichtung mit einer standardisierten Größe miteinander verbindbar sind und im verbundenen Zustand ein Verbundelement ausbilden. Wenn etwa die Verbindungseinrichtung als eine Schraube (Spezialschraube) ausgebildet ist, kann die Schraube ein Schraubengewinde mit einer einem standardisierten Maß, etwa M4, M5 oder M6, aufweisen.

Die Einfüllöffnung bzw. die Auslassöffnung in der Abdicht- und Positioniereinrichtung können als ein Einfüllkanal bzw. als ein Auslasskanal ausgebildet sein. Der Einfüllkanal kann eine Einfüllkanalfortsetzung aufweisen, die sich bis in das Einfülldurchloch hinein, d.h. bis unter die Paneeloberfläche, erstreckt, wenn die Abdicht- und Positioniereinrichtung auf der Paneeloberfläche aufgesetzt ist. Entsprechend kann der Auslasskanal eine Auslasskanalfortsetzung aufweisen, die sich bis in das Auslassdurchloch des Einsatzelements, d.h. im eingesetzten Zustand des Einsatzelements bis unter die Paneeloberfläche, erstreckt, wenn die Abdicht- und Positioniereinrichtung auf der Paneeloberfläche aufgesetzt ist. Die Kanalfortsetzungen dienen dazu, dass wenn die Abdicht- und Positioniereinrichtung nach dem Einfüllen des Füllfluids in den Zwischenraum von der Paneeloberfläche abgehoben wird, eine Abreißgrenze des Füllfluids innerhalb der Durchlöcher des Einsatzelements und mithin unterhalb der Paneeloberfläche ist und nicht über die Paneeloberfläche hinausragt.

Die Einsetzmittel können die Abdicht- und Positioniereinrichtung, die Verbindungseinrichtung und eine die Verbindungsgreifeinrichtung umfassende erste Armeinrichtung umfassen. Dabei kann die erste Armeinrichtung so ausgebildet und ansteuerbar sein, dass sie eine aus der Abdicht- und Positioniereinrichtung, der Verbindungseinrichtung und dem an der Verbindungseinrichtung lösbar befestigten Einsatzelement ausgebildete Verbundgruppe ergreifen, bewegen, in einer vorbestimmten Position positionieren und loslassen kann. Dabei kann die Verbindungsgreifeinrichtung den Griffabschnitt umfassen und über die erste Armeinrichtung so ansteuerbar sein, dass sie mit dem Griffabschnitt der Verbindungseinrichtung zusammenwirken kann und auf diese Weise das Verbundelement ergreifen, bewegen, positionieren und loslassen kann. Diese Ausgestaltungen tragen dazu bei, dass das mit dem System realisierte Verfahren leicht automatisierbar ist.

Das System kann eine zweite Armeinrichtung mit einer Betätigungseinrichtung zum Betätigen der Verbindungseinrichtung umfassen. Dabei kann die Betätigungseinrichtung so ausgebildet sein, dass sie mit der Verbindungseinrichtung zusammenwirken kann. Dabei kann die Betätigungseinrichtung auch so ausgebildet und über die zweite Armeinrichtung ansteuerbar sein, dass sie die Verbindungseinrichtung zum Verbinden der Abdicht- und Positioniereinrichtung mit und zum Lösen der Abdicht- und Positioniereinrichtung von dem Einsatzelement betätigen kann. Auch diese Ausgestaltungen tragen dazu bei, dass das mit dem System realisierte Verfahren relativ leicht automatisierbar ist.

Die Befüllmittel können ferner einen ansteuerbaren und positionierbaren Dosierautomaten mit einem Fluidvorratsbehälter zum Bevorraten einer vorbestimmten Vorratsmenge des aushärtbaren Füllfluids und einer Auslassöffnung zum Auslassen von Füllfluid umfassen. Das System kann eine mit einem Steuersignal ansteuerbare Dosiereinrichtung zum Starten und Beenden des Auslassens des Füllfluids aus dem Dosierautomaten umfassen. Auch diese Ausgestaltungen tragen dazu bei, dass das mit dem System realisierte Verfahren, insbesondere das Befüllen, leicht automatisierbar ist.

Die Dosiereinrichtung kann zum Öffnen und Verschließen der Auslassöffnung ausgebildet sein. Die Dosiereinrichtung kann auch ein Teil des Dosierautomaten sein. Die Auslassöffnung des Dosierautomaten und die Einfüllöffnung der Abdicht- und Positioniereinrichtung können so ausgebildet sein, dass sie einen in bezüglich des Füllfluids fluiddichten, lösbaren Kontakt miteinander gebracht werden können. So wird ein unerwünschtes Austreten des Füllfluids und dadurch verursachte Verunreinigungen in der Umgebung der Einfüllöffnung vermieden.

Die Befüllmittel können ferner eine dritte Armeinrichtung umfassen, die so ausgebildet und ansteuerbar sein kann, dass sie den Dosierautomaten bewegen und in einer vorbestimmten Position positionieren kann. Die dritte Armeinrichtung kann so ausgebildet sein, dass sie die Auslassöffnung des Dosierautomaten in fluiddichten Kontakt mit der Einfüllöffnung der Abdeck- und Positioniereinrichtung bringen kann.

In der Abdicht- und Positioniereinrichtung kann eine Sensoreinrichtung zum Überwachen der Auslassöffnung vorgesehen sein. Dabei kann die die Sensoreinrichtung dazu ausgebildet sein, ein Signal auszugeben, wenn Füllfluid durch die Auslassöffnung hindurch tritt.

Die Sensoreinrichtung kann eine mit ihrem Blickfeld auf die Auslassöffnung gerichtete, bildgebende Einrichtung sein. Alternativ dazu kann die Sensoreinrichtung eine Lichtschranke ausbilden bzw. eine Lichtschrankeneinrichtung ausbilden, die eine Lichtquelle und einen Lichtdetektor aufweisen, wobei ein Bereich zwischen der Lichtquelle und dem Lichtdetektor innerhalb der Auslassöffnung angeordnet ist. Wenn die Lichtschranke unterbrochen wird, kann das auszugebende Signal erzeugt werden.

Ein Steuersignaleingang der Dosiereinrichtung kann in elektrischer Kommunikation mit dem von der Sensoreinrichtung ausgegebenen Signal sein.

Das System kann ferner Mittel zum Voreinstellen einer aus der Auslassöffnung des Dosierautomaten auszulassenden, vorbestimmten Menge des Füllfluids umfassen.

Die Voreinstellmittel können Mittel zum Messen einer Einfüllzeitdauer und/oder Mittel zum Überwachen einer Massen- bzw. Gewichtszunahme des Paneelprodukts durch das eingefüllte Füllfluid umfassen.

Das System kann auch Mittel zum automatisierten Überprüfen einer Lastbeständigkeit der Verbindung zwischen dem Einsatzelement und der Ausnehmung umfassen. Derartige Mittel können eine vierte Armeinrichtung mit einer zweiten Verbindungsgreifeinrichtung zum Greifen der Verbindungseinrichtung umfassen. Dabei kann die zweite Verbindungsgreifeinrichtung so ausgebildet sein, dass sie mit der Verbindungseinrichtung, insbesondere mit deren Griffabschnitt, lösbar verbunden werden kann. Dabei kann die zweite Verbindungsgreifeinrichtung so ausgebildet und über die vierte Armeinrichtung so ansteuerbar sein, dass sie die Verbindungseinrichtung, insbesondere deren Griffabschnitt, greifen und halten, eine variierbare Prüfzugkraft bis zu einer vorbestimmten Prüfzugkraft auf die Verbindungseinrichtung, insbesondere dadurch auch auf das Einsatzelement, beaufschlagen und die Verbindungseinrichtung wieder loslassen kann. Es können ferner die auf das in der Vertiefung verankerte Einsatzelement aufgebrachte Prüfzugkraft, ein Kennzeichner für die Vertiefung und ein Kennzeichner für das die mindestens eine Vertiefung aufweisende Paneelvorprodukt protokolliert werden. Ferner kann ein Prüfzugkraft-Zeit-Verlauf, der während des Beauschlagens der variierbaren Prüfzugkraft auf das Einsatzelement durch die Armeinrichtung aufgenommen wird, aufgezeichnet werden.

Gemäß der Erfindung wird eine Abdicht- und Positioniereinrichtung mit einer Oberseite, einer Unterseite, einem Mittelabschnitt und einem den Mittelabschnitt umringenden Randabschnitt bereitgestellt. Dabei ist die Abdicht- und Positioniereinrichtung geeignet zur Verwendung in einem Verfahren bzw. System zum Herstellen einer Paneelproduktvorrichtung in dem ein Paneelvorprodukt mit mindestens einer in einer Paneeloberfläche ausgebildeten Ausnehmung mit einer Begrenzung und mindestens einem zum Verankern in mindestens einer der Ausnehmungen vorgesehenen Einsatzelement bereitgestellt ist. Dabei wird das Einsatzelement in die Ausnehmung des Paneelvorprodukts automatisiert eingesetzt und ein Zwischenraum zwischen dem Einsatzelement und der Begrenzung der Ausnehmung wird mit einem aushärtbaren bzw. aushärtenden Füllfluid automatisiert befüllt. Erfindungsgemäß weist die Abdicht- und Positioniereinrichtung eine in dem Mittelabschnitt angeordnete Öffnung, eine in dem Randabschnitt angeordnete Einfüllöffnung und eine in dem Randabschnitt im Wesentlichen der Einfüllöffnung diametral in Bezug auf den Mittelabschnitt gegenüberliegend angeordnete Auslassöffnung auf, und die Öffnung, die Einfüllöffnung und die Auslassöffnung erstrecken sich durch die Abdicht- und Positioniereinrichtung hindurch.

Die Einfüllöffnung kann an der Oberseite so ausgebildet sein, dass Füllfluid an der Oberseite automatisiert eingefüllt und an der Unterseite, etwa in den Zwischenraum, wenn die Abdicht- und Positioniereinrichtung auf der Paneeloberfläche über der Ausnehmung aufgelegt ist, austreten kann, und dass die Auslassöffnung so ausgebildet ist, dass Füllfluid, etwa überschüssiges Füllfluid aus dem Zwischenraum an der Oberseite austreten kann, wenn die Abdicht- und Positioniereinrichtung auf der Paneeloberfläche über der Ausnehmung aufgelegt ist, und von der Unterseite her zur Oberseite durch die Auslassöffnung hindurch treten kann.

An der Unterseite der Abdicht- und Positioniereinrichtung kann der Mittelabschnitt in Bezug auf den Randabschnitt um eine vorbestimmte Vorsprunghöhe, bevorzugt etwa 0,01 bis 0,05 mm, mehr bevorzugt etwa 0,03 mm, vorspringen. Die Öffnung kann einen, etwa nahe der Oberseite, umlaufenden oder abschnittsweise umlaufenden Widerhaken aufweisen.

Die Abdicht- und Positioniereinrichtung kann einen ersten Kanalfortsatz, der an der Unterseite um einen Auslass der Einfüllöffnung herum ausgebildet ist, und einen zweiten Kanalfortsatz, der an der Unterseite um einen Auslass der Auslassöffnung herum ausgebildet ist, aufweisen. Die Abdicht- und Positioniereinrichtung kann auch einen auf deren Unterseite aufgebrachten Klebstofffilm aufweisen. Ferner kann die Abdicht- und Positioniereinrichtung eine oder mehrere an ihrem Umfang angeordnete Umfangsmarkierungen aufweisen, die dazu geeignet sind, die Abdicht- und Positioniereinrichtung in eine vorbestimmte, reproduzierbare Drehposition in Bezug auf eine sich durch die zentrale Öffnung hindurch erstreckende Achse zu bringen. Die Umfangsmarkierungen können in der Form von Einbuchtungen ausgebildet sein.

Die Abdicht- und Positioniereinrichtung kann aus einem transparenten Material, wie etwa C-PET oder PMMA, hergestellt sein. Ferner kann sie eine an der Oberseite am Auslass der Auslassöffnung angebrachte Sensoreinrichtung aufweisen, die dazu ausgebildet ist, durch die Auslassöffnung hindurch tretendes Füllfluid zu detektieren und die etwa als Lichtschrankeneinrichtung ausgebildet sein kann.

Gemäß einem vierten Aspekt der Erfindung wird ein Montagehilfswerkzeugsatz bereitgestellt zur Verwendung in einem Verfahren bzw. System zum Herstellen einer Paneelproduktvorrichtung, in dem ein Paneelvorprodukt mit mindestens einer in einer Paneeloberfläche ausgebildeten Ausnehmung mit einer Begrenzung und mindestens einem zum Verankern in mindestens einer der Ausnehmungen vorgesehenen Einsatzelement bereitgestellt ist, wobei das Einsatzelement in die Ausnehmung des Paneelvorprodukts automatisiert eingesetzt wird und ein Zwischenraum zwischen dem Einsatzelement und der Begrenzung der Ausnehmung mit einem aushärtbaren bzw. aushärtenden Füllfluid automatisiert befüllt wird. Erfindungsgemäß umfasst der Montagehilfswerkzeugsatz eine Abdicht- und Positioniereinrichtung mit einer Oberseite, einer Unterseite, einem Mittelabschnitt und einem den Mittelabschnitt umringenden Randabschnitt, eine in dem Mittelabschnitt angeordnete Öffnung, eine in dem Randabschnitt angeordnete Einfüllöffnung und eine in dem Randabschnitt im Wesentlichen der Einfüllöffnung diametral in Bezug auf den Mittelabschnitt gegenüberliegend angeordnete Auslassöffnung. Dabei erstrecken sich die Öffnung, die Einfüllöffnung und die Auslassöffnung durch die Abdicht- und Positioniereinrichtung hindurch. Ferner umfasst der Montagehilfswerkzeugsatz eine Verbindungseinrichtung zum lösbaren Verbinden der Abdicht- und Positioniereinrichtung mit dem Einsatzelement.

Die Verbindungseinrichtung kann zum Verbinden der Abdicht- und Positioniereinrichtung mit und zum Lösen der Abdicht- und Positioniereinrichtung von dem Einsatzelement betätigbar sein. Insbesondere kann die Verbindungseinrichtung einen Griffabschnitt aufweisen, der so ausgebildet ist, dass er von einer Verbindungsgreifeinrichtung lösbar ergriffen werden kann.

Die Abdicht- und Positioniereinrichtung kann in der Öffnung einen, etwa nahe der Oberseite, umlaufenden oder abschnittsweise umlaufenden Widerhaken umfassen und die Verbindungseinrichtung kann ausgebildet sein als eine Spezialschraube mit einem Schraubenkragen, der beim Hindurchführen der Spezialschraube durch die Öffnung mit dem bzw. den Widerhaken so zusammen wirkt, dass der Kragen beim Hindurchführen an den Widerhaken vorbei gleitet und beim Zurückziehen der Spezialschraube mit den Widerhaken ein Eingriff kommt.

Die Verbindungseinrichtung kann als eine Spezialschraube mit einem Schraubenkopf, der auf einer Oberseite eine zentrische Markierung aufweist, ausgebildet sein. Alternativ und/oder zusätzlich dazu kann der Schraubenkopf der auf einer Oberseite eine oder mehrere auf einem Kreis auf dem Schraubenkopf angebrachte, voneinander unterscheidbare Markierungen aufweisen.

Weiter wird ein nicht beanspruchtes System zum Überprüfen einer Lastbeständigkeit der Verbindung zwischen einem Einsatzelement und einer Ausnehmung in einer Paneeloberfläche eines Paneelvorprodukts bereitgestellt. Dabei ist das Einsatzelement dazu vorgesehen, in die Ausnehmung eingesetzt und durch Befüllen des Zwischenraums zwischen dem Einsatzelement und einer Begrenzung der Ausnehmung mit einem aushärtbaren bzw. aushärtenden Füllfluid in der Ausnehmung verankert zu werden. Erfindungsgemäß umfasst das System mindestens ein Einsatzelement, mindestens eine Verbindungseinrichtung, die zum Herstellen einer Verbindung mit und zum Lösen der Verbindung von dem Einsatzelement betätigbar ist, und Mittel zum automatisierten Überprüfen einer Lastbeständigkeit der Verbindung zwischen der Verbindungseinrichtung und dem Einsatzelement.

Die Verbindungseinrichtung kann als eine Spezialschraube mit einem Schraubenkopf und einem Schraubengewinde ausgebildet sein und das Einsatzelement kann eine Gewindebohrung aufweisen. Dabei können die Gewindebohrung und das Schraubengewinde so zusammen passen, dass das Schraubengewinde in der Gewindebohrung eingeschraubt werden kann. Die Gewindebohrung des Einsatzelements kann entlang einer Symmetrieachse des Einsatzelements ausgebildet sein.

Die Verbindungseinrichtung kann einen Griffabschnitt aufweisen, der so ausgebildet ist, dass er von einer Verbindungsgreifeinrichtung lösbar ergriffen werden kann.

Die Mittel zum automatisierten Überprüfen einer Lastbeständigkeit können folgendes umfassen: eine Armeinrichtung mit einer Verbindungsgreifeinrichtung zum Greifen der Verbindungseinrichtung. Dabei kann die Verbindungsgreifeinrichtung so ausgebildet sein, dass sie mit der Verbindungseinrichtung, insbesondere mit deren Griffabschnitt, lösbar verbunden werden kann. Auch kann dabei die Verbindungsgreifeinrichtung so ausgebildet und über die Armeinrichtung ansteuerbar sein, dass sie die Verbindungseinrichtung, insbesondere deren Griffabschnitt, greifen, halten, eine variierbare Prüfzugkraft bis zu einer vorbestimmten Prüfzugkraft auf die Verbindungseinrichtung, insbesondere dadurch auch auf das Einsatzelement, beaufschlagen und loslassen kann.

Die Mittel zum automatisierten Überprüfen einer Lastbeständigkeit können ferner Mittel zum Protokollieren der auf ein in einer Vertiefuna verankertes Einsatzelement aufgebrachten Prüfzugkraft, einem Kennzeichner für die Vertiefung und einem Kennzeichner für das die mindestens eine Vertiefung aufweisende Paneelvorprodukt umfassen. Sie können ferner Mittel zum Aufzeichnen eines Prüfzugkraft-Zeit-Verlaufs, der während des Beauschlagens der variierbaren Prüfzugkraft auf das Einsatzelement durch die Armeinrichtunq aufgenommen werden kann, umfassen.

Weiter wird ein nicht beanspruchtes Verfahren zum Überprüfen einer Lastbeständigkeit der Verbindung zwischen einem Einsatzelement und einer Ausnehmung in einer Paneeloberfläche eines Paneelvorprodukts bereitgestellt. Dabei ist das Einsatzelement dazu vorgesehen, in die Ausnehmung eingesetzt und durch Befüllen des Zwischenraums zwischen dem Einsatzelement und einer Begrenzung der Ausnehmung mit einem aushärtbaren bzw. aushärtenden Füllfluid in der Ausnehmung verankert zu werden. Erfindungsgemäß umfasst das Verfahren die folgenden Schritte: automatisiertes Herstellen einer Verbindung einer Verbindungseinrichtung mit einem in einer Ausnehmung nach dem Aushärten des Füllfluids verankerten Einsatzelement, automatisiertes Greifen der Verbindungseinrichtung mittels einer an einer ansteuerbaren Armeinrichtung angebrachten, ansteuerbaren Verbindungsgreifeinrichtung, und Beaufschlagen einer variierbaren Prüfzugkraft bis zu einer vorbestimmten Prüfzugkraft auf die Verbindungseinrichtung, insbesondere dadurch auch auf das Einsatzelement.

Es können ferner die auf das in der Vertiefung verankerte Einsatzelement aufgebrachte Prüfzugkraft, ein Kennzeichner für die Vertiefung und ein Kennzeichner für das die mindestens eine Vertiefung aufweisende Paneelvorprodukt protokolliert werden.

Ferner kann ein Prüfzugkraft-Zeit-Verlauf, der während des Beauschlagens der variierbaren Prüfzugkraft auf das Einsatzelement durch die Armeinrichtung aufgenommen wird, aufgezeichnet werden.

Ferner kann die Verbindung zwischen der Verbindungseinrichtung und dem Einsatzelement automatisiert gelöst werden. Auch kann die Verbindungseinrichtung durch die Verbindungsgreifeinrichtung automatisierte losgelassen werden.

Weiter wird eine nicht beanspruchte Paneelproduktvorrichtung bereitgestellt, die aus einem Paneelvorprodukt mit mindestens einer in einer Paneeloberfläche ausgebildeten Ausnehmung mit einer Begrenzung und einem zum Einsetzen in mindestens einer der Ausnehmungen verankerbaren Einsatzelement hergestellt ist. Die Paneelproduktvorrichtung umfasst das Paneelvorprodukt mit der in einer Paneeloberfläche ausgebildeten Ausnehmung und das in der Ausnehmung verankerte Einsatzelement. Dabei weist die Ausnehmung eine Begrenzung zu einem Grundmaterial des Paneelvorprodukts auf. Erfindungsgemäß ist ein Zwischenraum zwischen dem Einsatzelement und der Begrenzung der Ausnehmung mit einem ausgehärteten Füllfluid automatisiert und im Wesentlichen vollständig ausgefüllt worden und die Paneelproduktvorrichtung weist eine vorbestimmte Lastfestigkeit der Verankerung des Einsatzelements in der Ausnehmung auf.

Die Paneelproduktvorrichtung kann zum Einsatz in einem Luft- und/oder Raumfahrzeug vorgesehen bzw. entsprechend ausgebildet sein.

Die Paneelproduktvorrichtung kann mit oben beschriebenen Verfahren hergestellt worden sein.

Das Paneelvorprodukt kann ein Leichtbaupaneel umfassen bzw. aus einem Leichtbaupaneel hergestellt worden sein.

Schließlich wird noch ein nicht beanspruchtes Luft- und/oder Raumfahrzeug vorgeschlagen, das mindestens eine hiervor beschriebene Paneelproduktvorrichtung umfasst.

Weitere Eigenschaften und Vorteile der Erfindung werden im Folgenden anhand einer Beschreibung vorteilhafter Ausführungsformen und mit Bezug auf die beigefügten Zeichnungen ausführlich beschrieben. Es zeigen:
**Fig. 1** eine Bodenansicht einer ersten Ausführungsform einer erfindungsgemäßen Abdeck- und Positioniereinrichtung mit einem daran mittels einer Verbindungseinrichtung befestigten Einsatzelement, zur Verwendung in dem erfindungsgemäßen Verfahren bzw. System.
**Fig. 2** einen Querschnitt der Abdeck- und Positioniereinrichtung aus Fig. 1 mit dem daran befestigten Einsatzelement, geschnitten durch die horizontale Symmetrielinie in Fig. 1.
**Fig. 3** eine Draufsicht der Abdeck- und Positioniereinrichtung aus der Fig. 1 mit einer Verbindungseinrichtung, hier einer Spezialschraube.
**Fig. 4** eine Draufsicht der Abdeck- und Positioniereinrichtung aus der Fig. 1 ohne die Verbindungseinrichtung, hier die Spezialschraube.
**Fig. 5** einen anderen Querschnitt durch die in Fig. 2 gezeigten Teile, geschnitten durch die vertikale Symmetrielinie in Fig. 3.
**Fig. 6** einen Querschnitt durch die in den Figuren 2 und 5 gezeigten Teile, eine erste Armeinrichtung und ein Paneelvorprodukt während des Einsetzens des Einsatzelements in die Ausnehmung.
**Fig. 7** einen Querschnitt durch die in den Figuren 2 und 5 gezeigten Teile und ein Paneelvorprodukt während des Befüllens des Zwischenraumes zwischen dem Einsatzelement und der Begrenzung der Ausnehmung.
**Fig. 8** einen Querschnitt durch die in den Figuren 2 und 5 gezeigten Teile, eine andere Armeinrichtung und ein Paneelprodukt beim Beaufschlagen einer Prüfzugkraft auf die Verbindungseinrichtung und dadurch auf das Einsatzelement.
**Fig. 9** einen Querschnitt durch die in den Figuren 2 und 5 gezeigten Teile, ein Paneelprodukt und eine Betätigungseinrichtung beim Lösen der Verbindung zwischen dem Einsatzelement und der Abdeck- und Positioniereinrichtung durch Betätigen der Verbindungseinrichtung (d.h. der Spezialschraube).
**Fig. 10** einen Querschnitt einer zweiten Ausführungsform einer Abdeck- und Positioniereinrichtung mit einem daran mittels einer Verbindungseinrichtung befestigten Einsatzelement zur Verwendung in dem erfindungsgemäßen Verfahren bzw. System und geschnitten durch die horizontale Symmetrielinie in Fig. 11.
**Fig. 11** eine Draufsicht auf die Abdeck- und Positioniereinrichtung und die Verbindungseinrichtung aus Fig. 10.
**Fig. 12** einen anderen Querschnitt der in Fig. 10 gezeigten Teile, geschnitten durch die vertikale Symmetrielinie in Fig. 11.

### Detaillierte Beschreibung der Erfindung:

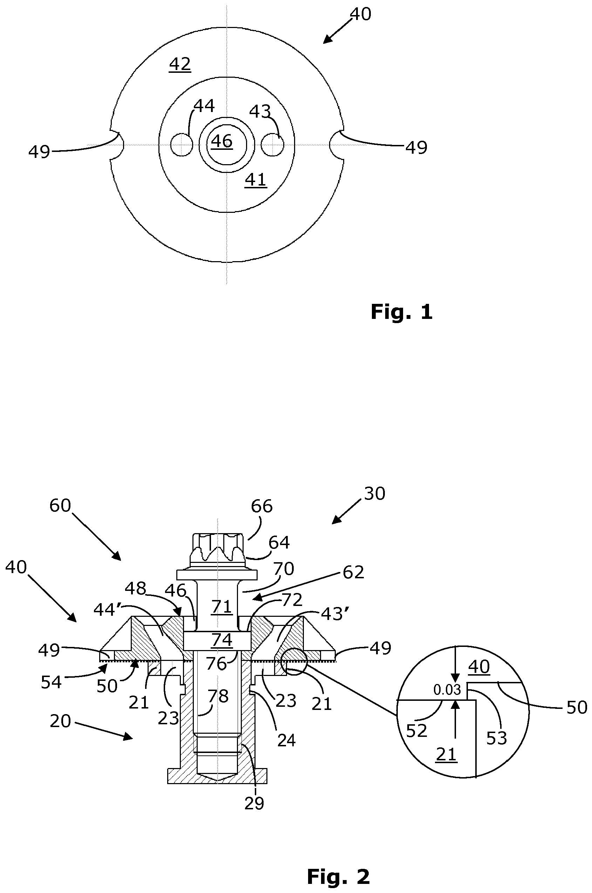

Das Prinzip der vorliegenden Erfindung wird zunächst im Zusammenhang eines ersten Ausführungsbeispiels mit Verweis auf die Figuren 1 bis 9 beschrieben.

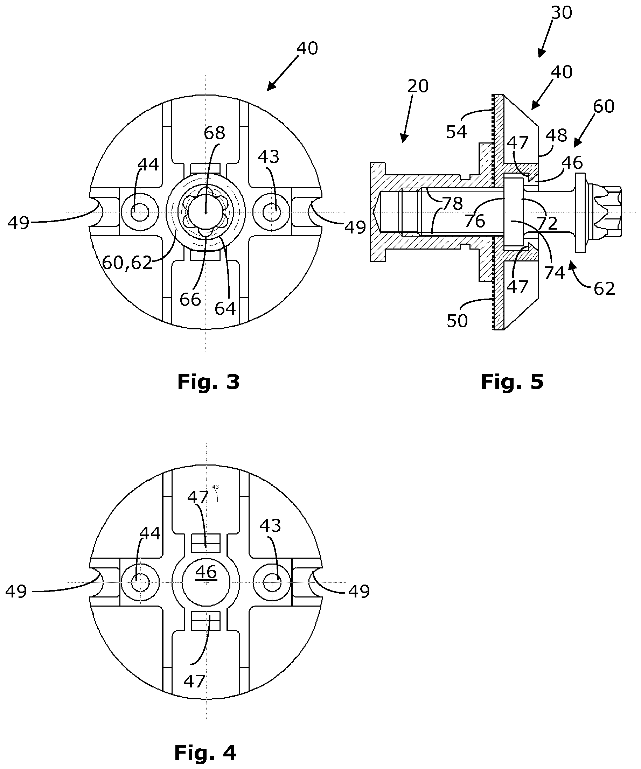

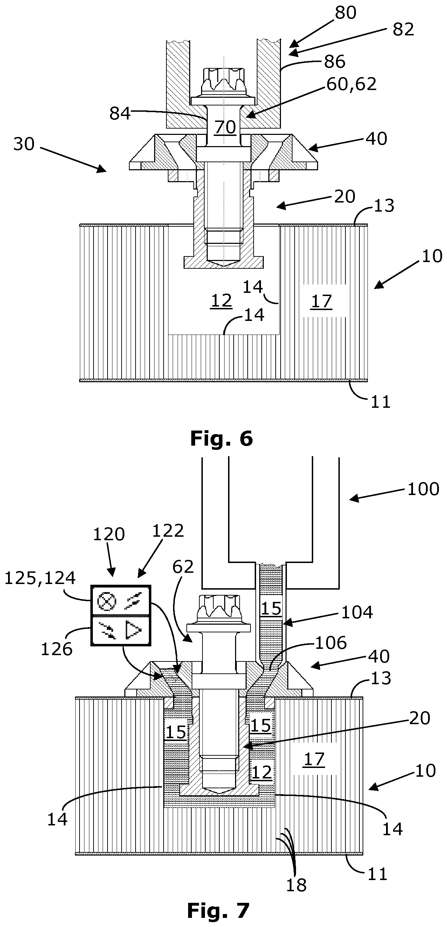

In der ersten Ausführungsform werden ein Verfahren und ein System zum Herstellen einer Paneelproduktvorrichtung bereitgestellt. Das Verfahren und das System benötigen als Ausgangspunkt ein Paneelvorprodukt 11 mit mindestens einer in einer Paneeloberfläche 13 ausgebildeten Ausnehmung 12 mit einer Begrenzung zu einem Grundmaterial 17 (siehe Fig. 6) und mindestens ein zum Einsetzen in die Ausnehmung 12 vorgesehenes Einsatzelement 20, das zusammen mit einer Abdeck- und Positioniereinrichtung 40 mittels einer Verbindungseinrichtung 60 zu einem Verbundelement vormontiert ist (siehe Figuren 2 und 5). Das erfindungsgemäße Verfahren und System zum Einsetzen von Einsatzelementen 20 in Ausnehmungen 12 des Paneelvorprodukts 11 ersetzen das bisher praktizierte manuelle Einsetzen und Einschäumen von Einsatzelementen 20 in die Ausnehmungen 12.

Das System umfasst Mittel zum automatisierten Einsetzen des Einsatzelements 20 in die Ausnehmung 12 des Paneelvorprodukts 11 (siehe Fig. 6) und Mittel zum automatisierten Befüllen eines Zwischenraums 16 zwischen dem Einsatzelement 20 und der Begrenzung 14 der Ausnehmung 12 mit einem aushärtbaren bzw. aushärtenden Füllfluid 15 (siehe Fig. 7).

Die Mittel zum automatisierten Einsetzen umfassen eine Abdicht- und Positioniereinrichtung 40 (siehe Figuren 1 und 4) mit einer Einfüllöffnung 43 zum Einfüllen des Füllfluids 15 in den Zwischenraum 16 und mit einer Auslassöffnung 44 zum Auslassen überschüssigen Füllmittels 15 aus dem Zwischenraum 16. Die Abdicht- und Positioniereinrichtung 40 weist eine Unterseite 50 auf, die so ausgebildet ist, dass das Einsatzelement 20 daran lösbar befestigt werden kann (siehe Figuren 2, 3 und 5). Die Abdicht- und Positioniereinrichtung 40 ist so ausgebildet, dass beim Aufliegen auf der Paneeloberfläche 13 eine bezüglich des Füllfluids 15 fluiddichte Abdichtung zwischen der Paneeloberfläche 13 und der Abdicht- und Positioniereinrichtung 40 ausgebildet ist (wie insbesondere in Fig. 7 gezeigt).

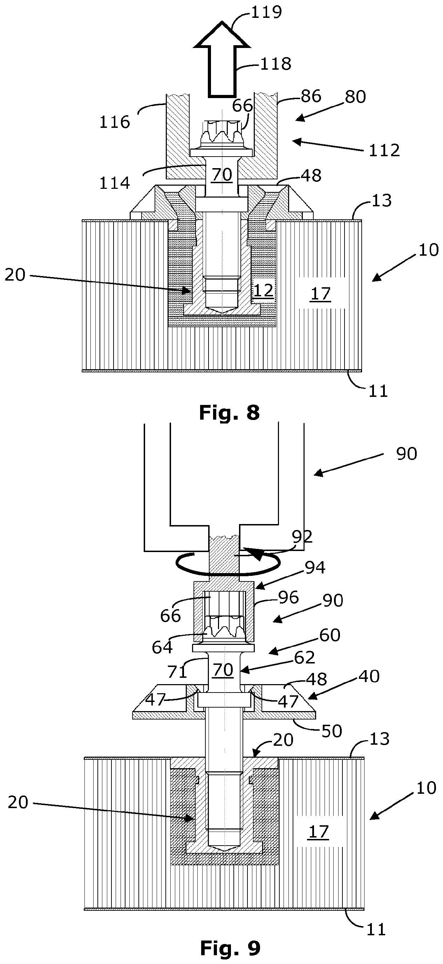

Das System umfasst ferner eine Verbindungseinrichtung 60 zum lösbaren Verbinden der Abdicht- und Positioniereinrichtung 40 mit dem Einsatzelement 20. Die Verbindungseinrichtung 60 ist betätigbar zum Verbinden der Abdicht- und Positioniereinrichtung 40 mit, und zum Lösen der Abdicht- und Positioniereinrichtung 40 von dem Einsatzelement 20 (siehe Fig. 9). Die Verbindungseinrichtung 60 weist einen Griffabschnitt 70 auf, der so ausgebildet ist, dass er von einer Verbindungsgreifeinrichtung 110 lösbar ergriffen werden kann (siehe Fig. 6). Die Verbindungseinrichtung 60 ist als eine Spezialschraube 62 ausgebildet (siehe Figuren 2 und 5), die einen zumindest abschnittweise zylinderförmigen Griffabschnitt 71 (siehe Fig. 2) aufweist, der so ausgebildet ist, dass er von einer Verbindungsgreifeinrichtung 82 (Fig. 6) bzw. 112 (Fig. 8) lösbar ergriffen werden kann.

Die in Fig. 6 gezeigte Verbindungsgreifeinrichtung 82 gehört zu einer ersten Armeinrichtung 80, etwa einem ersten Roboterarm, mit Greiffingern 86, die in ihrem Greifbereich jeweils eine Greiffläche 84 aufweisen. Die Greiffinger 86 sind um einen Drehpunkt (nicht gezeigt) schwenkbar gelagert, so dass mehrere Greiffinger wie die Finger einer menschlichen Hand zum Zugreifen aufeinander zu und zum Loslassen voneinander weg geschwenkt werden können. Die in Fig. 8 gezeigte zweite Verbindungsgreifeinrichtung 112 weist einen funktionell vergleichbaren Aufbau auf wie die Einrichtung 82 aus Fig. 6 und umfasst Greiffinger 116 mit an deren Endabschnitten ausgebildeten Greifflächen 114. Die zweite Verbindungsgreifeinrichtung 112 gehört zu einer vierten Armeinrichtung 110, etwa einem vierten Roboterarm. Die in den Fig. 6 bzw. 8 gezeigte erste bzw. vierte Verbindungsgreifeinrichtung 80 bzw. 110 kann die gleich sein, wenn sie variabel so programmierbar ist, dass sie einerseits die in Fig. 6 veranschaulichte Funktion des Einsetzens des Einsatzelements 20 in die Ausnehmung 12 und andererseits den in Fig. 8 angedeuteten Lastbeständigkeitstest, bei dem eine variierbare Prüfzugkraft 118 auf die Verbindungseinrichtung 60 bzw. die Spezialschraube 62 und dadurch auch auf das Einsatzelement 20 beaufschlagt wird, ausführen kann.

Die Einsetzmittel umfassen in der in den Fig. 1 bis 9 gezeigten ersten Ausführungsform die Abdicht- und Positioniereinrichtung 40, die Verbindungseinrichtung 60 (Spezialschraube 62), die erste Verbindungsgreifeinrichtung 82 und die erste Armeinrichtung 80 bzw. den ersten Roboterarm.

Das System umfasst ferner eine Betätigungseinrichtung 92 zum Betätigen der Verbindungseinrichtung 60 (etwa der Spezialschraube 62), eine zweite Armeinrichtung 90, etwa einen zweiten Roboterarm, zum Führen der Betätigungseinrichtung 92. Die Betätigungseinrichtung 92 umfasst ein Werkzeug 94, das so ausgebildet ist, dass es mit der Verbindungseinrichtung 60 (der Schraube 62) zusammenwirken kann zum Verbinden der Einrichtung 40 mit und zum Lösen von dem Einsatzelement 20. Die Abdeck- und Positioniereinrichtung 40, das Einsatzelement 20 und die Verbindungseinrichtung 60 bilden im miteinander verbundenen (vormontierten) Zustand (siehe Figuren 2, 3 und 5) ein Verbundelement.

Die Spezialschraube 62 als Ausführungsform der Verbindungseinrichtung 60 umfasst einen Schraubenkopf 64 mit einem Außensechsrund 66 (siehe Fig. 2, 3 und 5), einen sich von dem Schraubenkopf 64 in Fig. 2 abwärts erstreckenden, im Wesentlichen zylinderförmigen Schraubenhals 71, einen den Schraubenhals 71 begrenzenden Schraubenkragen 74 mit einer oberen Anschlagfläche 72 und einer unteren Anschlagfläche 76, und ein sich von der unteren Anschlagfläche 76 des Schraubenkragens 74 noch weiter (in Fig. 2 abwärts) erstreckendes Schraubengewinde 78, das ein für Metallschrauben normiertes Gewinde, etwa gemäß einer der Normungen M4, M5 und M6, ist. Die Gewindebohrung 29 im Einsatzelement 20 dient zum Eingreifen mit bzw. zum Aufnehmen des Schraubengewindes 78 und ist ebenfalls normiert, etwa gemäß einer der Normungen M4, M5 und M6. Das Werkzeug 94 der Betätigungseinrichtung 92 ist als Außensechsrundschrauber 96 ausgebildet, so dass dieser einfach und ggf. durch einen Schraubautomaten mit Greifarm automatisiert auf den Außensechsrund 66 des Schraubenkopfs 64 aufgesteckt werden und beim Verdrehen den Schraubenkopf 64 und damit die gesamte Spezialschraube 62 mitdrehen kann (siehe Fig. 9).

Die Mittel zum automatisierten Befüllen des Zwischenraums 16 umfassen einen ansteuerbaren und positionierbaren Dosierautomaten 102 mit einem Fluidvorratsbehälter 104 zum Bevorraten einer vorbestimmten Vorratsmenge des Füllfluids 15 und einer Auslassöffnung 106 zum Auslassen von Füllfluid. In dem System ist, etwa als Teil des Dosierautomaten 102, ferner eine mittels eines Steuersignals ansteuerbare Dosiereinrichtung (nicht gezeigt) zum Starten und Beenden des Auslassens des Füllfluids 15 aus der Auslassöffnung 106 des Dosierautomaten 102 vorgesehen. Die Befüllmittel umfassen ferner eine dritte Armeinrichtung 100, etwa einen dritten Roboterarm, die bzw. der so ausgebildet und ansteuerbar ist, dass der Dosierautomat 102 gegriffen, bewegt und in einer vorbestimmten Position positioniert werden kann. Die dritte Armeinrichtung 100 ist so ansteuerbar, dass der Dosierautomat 102 exakt und sicher in eine Einfüllposition geführt und positioniert werden kann. Dabei kommt die Auslassöffnung 106 des Dosierautomaten 102 in direkte Fluidkommunikation mit der Einfüllöffnung 43 der Abdeck- und Positioniereinrichtung 40. Um die Auslassöffnung 106 herum ist ein kegelstumpfförmiger Auslassabschnitt des Dosierautomaten 102 ausgebildet, der einen bezüglich des Füllfluids 15 fluiddichten Formschluss mit einem Ansetzbereich der Einlassöffnung 43 ausbilden kann (siehe Fig. 7).

Die Befüllmittel umfassen ferner eine Sensoreinrichtung 120 zum Überwachen der Auslassöffnung 44. Die Sensoreinrichtung ist in bzw. an der Abdicht- und Positioniereinrichtung 40 vorgesehen und als eine Lichtschrankeneinrichtung 122 ausgebildet. Letztere umfasst eine Lichtquelle 124, etwa eine LED 125, die in bzw. auf der Einrichtung 40 seitlich an bzw. neben der Auslassöffnung 44 angeordnet ist, und einen Lichtsensor 126, der ebenfalls seitlich an der Auslassöffnung 44 und diametral gegenüberliegend in Bezug auf die Lichtquelle 124 angeordnet ist (siehe Fig. 7).

Im Betrieb des Systems wird Füllfluid 15 aus dem Vorratsbehälter 104 durch dessen Auslassöffnung 106 und durch die Einlassöffnung 43 in den Zwischenraum 12 eingefüllt, bis der Zwischenraum 12 im Wesentlichen vollständig mit dem Füllfluid 15 ausgefüllt ist und das Füllfluid 15 schließlich aus der Auslassöffnung 44 heraustritt und dabei die Lichtschrankeneinrichtung 122 aktiviert. Die Lichtschrankeneinrichtung 122 detektiert das Austreten des Füllfluids 15 aus der Auslassöffnung 44 dadurch, dass die optische Verbindung zwischen der Lichtquelle 124 und dem Lichtsensor 126 durch das austretende Füllfluid 15 unterbrochen wird. Wenn die Lichtschranke durch das aus der Öffnung 44 austretende Füllfluid 15 aktiviert wird, gibt die Sensoreinrichtung (Lichtschrankeneinrichtung 122) ein Signal aus, das das als ein Steuersignal einem Steuersignaleingang der Dosiereinrichtung (nicht gezeigt) zugeführt wird.

Das System zum Herstellen der Paneelproduktvorrichtung 10 umfasst ferner ein System zum automatisierten Überprüfen einer Lastbeständigkeit der Verankerung des Einsatzelements 20 in der Ausnehmung 12 bzw. des Paneelvorprodukts 11. Das automatisierte Lastbeständigkeitsüberprüfungssystem umfasst eine zweite Verbindungsgreifeinrichtung 112 zum Greifen der Verbindungseinrichtung 60 bzw. konkret der Spezialschraube 62. Die zweite Verbindungsgreifeinrichtung 112 umfasst zwei oder mehr Greiffinger 116, an deren Endabschnitt jeweils eine Greiffläche 114 zum Eingreifen mit dem Griffabschnitt 70 der Verbindungseinrichtung 60, konkret mit dem Schraubenhals 71 der Spezialschraube 62. Die automatisierten Überprüfungsmittel umfassen ferner eine vierte Armeinrichtung 110, etwa einen vierten Roboterarm, mittels der die zweite Verbindungsgreifeinrichtung 112 so angesteuert wird, dass der Griffabschnitt 70 (konkret: der Schraubenhals 71) gegriffen, gehalten und losgelassen werden kann. Danach wird die vierte Armeinrichtung 110 so angesteuert, dass eine variierbare Prüfzugkraft 118 (in Fig. 8 durch den Pfeil 119 dargestellt) auf die Verbindungseinrichtung 60 (konkret: die Spezialschraube 62) beaufschlagt wird und bis auf eine auf die Verbindungseinrichtung 60 und dadurch auf das Einsatzelement 20 wirkende, vorbestimmte Prüfzugkraft erhöht wird. Die vorbestimmte Prüfzugkraft entspricht einer für das Paneelprodukt 10 anzugebenden garantierten Lastbeständigkeit bzw. Verbindungsqualität des in der Ausnehmung 12 verankerten Einsatzelements 20 (vergleiche Fig. 9). Die vorbestimmte Prüfzugkraft ist so gewählt, dass sie mindestens so groß ist, wie eine gegenüber einem Anwender der Paneelproduktvorrichtung 10 auf Wunsch zu garantierende Prüfzugkraft bzw. Zug- bzw. Lastbeständigkeit. Wenn in dem Zugtest die vorbestimmte Prüfzugkraft erreicht wird und dabei das eingesetzte, getestete Einsatzelement 20 in der Ausnehmung 12 verankert bleibt, erfüllt das getestete Einsatzelement 20 die garantierte Zug- bzw. Lastbeständigkeit. In einem Prüf- bzw. Testprotokoll, das automatisch erstellt werden kann, werden zumindest ein Kennzeichner für das getestete Einsatzelement 20 bzw. die getestete Vertiefung 12, ein Kennzeichner für das die mindestens eine Vertiefung 12 mit dem eingesetzten Einsatzelement 20 aufweisende Paneelvorprodukt 11 und die auf das verankerte Einsatzelement 20 aufgebrachte Prüfzugkraft protokolliert. In dem Protokoll kann auch Prüfzugkraft-Zeit-Verlauf, der während des Beauschlagens der variierbaren Prüfzugkraft 118 auf das Einsatzelement 20 durch die Armeinrichtung 110 aufgenommen wird, aufgezeichnet werden. Das Protokoll kann einer gesamten Charge oder einer einzelnen Paneelprodukt 10 zugeordnet sein, und es enthält die protokollierten Daten für alle in das Paneelprodukt 10 eingesetzten und getesteten Einsatzelemente 20. Durch den Zug- bzw. Lastbeständigkeitstest bzw. das aufgezeichnete Protokoll kann eine Prozesssicherheit für das automatisierte Einsetzen (im Fachjargon "Potten" genannt) der Einsatzelemente dokumentiert werden.

Das Einsatzelement 20 ist im Wesentlichen rotationssymmetrisch aufgebaut und weist einen im Wesentlichen zylinderförmigen Mittelabschnitt (nicht bezeichnet), einen an einem ersten (in Fig. 2 unteren) Ende ausgebildeten bodenseitigen Flansch 27 mit einer ebenen Bodenfläche 26 und einen an einem zweiten, dem ersten gegenüberliegenden (in Fig. 2 oberen) Ende des Mittelabschnitts ausgebildeten oberseitigen Flansch 21 mit einer ebenen oberseitigen Fläche 22 auf. In das Einsatzelement 20 ist von der oberseitigen Fläche 22 ausgehend eine zentrierte und sich in Richtung der Symmetrieachse erstreckende Bohrung 28 ausgebildet, die sich durch den Mittelabschnitt hindurch erstreckt und die zumindest abschnittsweise von der oberseitigen Fläche 22 ausgehend als Gewindebohrung 29 ausgebildet ist. In dem oberseitigen Flansch 21 sind zwei sich diametral gegenüberliegende Durchlöcher 23 ausgebildet, siehe Fig. 2. In dem im Wesentlichen zylinderförmigen, nach dem Einsetzen des Einsatzelements 20 in die Ausnehmung 12 innerhalb der Ausnehmung 12 angeordneten und von dem eingefüllten Füllfluid umgebenen Mittelabschnitt eines kommerziell erhältlichen Einsatzelements 20 ist in der Nähe des oberseitigen Flanschs 21 eine ringförmig umlaufende Einkerbung 24 ausgebildet. Die Einkerbung 24 dient dazu bzw. ermöglicht, dass der Mittelabschnitt des Einsatzelements 20 leichter diametral einwärts gequetscht werden kann und so ein mit s/einem Schraubengewinde in der Gewindebohrung 29 eingeschraubtes Befestigungselement, wie etwa eine Befestigungsschraube oder ein Schraubhaken, nach dem Einschrauben durch die Quetschung in dem Einsatzelements 20 gesichert ist. Eine derartige Sicherung eines eingeschraubten Befestigungselements ist bei einer Verwendung des Paneelprodukts 10 in einem in der Schwerelosigkeit reisenden Raumfahrzeug relevant.

Wenn bei einer Verwendung des Paneelvorprodukts 10 ein in der Gewindebohrung 29 des Einsatzelements 20 eingeschraubtes Befestigungselement, wie etwa eine Befestigungsschraube oder ein Schraubhaken, einem Außensechsrund aufweist, etwa wenn eine Befestigungsschraube einen Schraubenkopf mit einem Außensechsrund aufweist, dann ist es relativ einfach, ein Schraubwerkzeug an dem Außensechsrund automatisiert anzusetzen und eine Messung des Drehmoments durchzuführen, das erforderlich ist, um das Befestigungselement mit seinem Schraubengewinde in die Gewindebohrung 29 des Einsatzelements 20 und in den bei der Einkerbung 24 gequetschten Mittelabschnitt des Einsatzelements 20 einzuschrauben. Die Größe des zum Einschrauben des Befestigungselements in den gequetschten Mittelabschnitt erforderlichen Drehmoments kann als Maß für die Qualität der Quetschung und die bei einer Anwendung der Paneelproduktvorrichtung 10 in der Schwerelosigkeit zu erwartende Sicherungsqualität des in der Gewindebohrung 29 des Einsatzelements 20 eingeschraubten Befestigungselements dienen.

Die Abdicht- und Positioniereinrichtung 40 ist als eine kreisförmige und im Wesentlichen rotationssymmetrische Platte mit einem bezüglich der Rotationssymmetrieachse zentrierten Mittelabschnitt 41 und einen den Mittelabschnitt 41 umringenden, ringförmigen Randabschnitt 42. Zentriert im Mittelabschnitt 41 ist ein Durchloch bzw. eine Öffnung 46 ausgebildet. Die Rotationssymmetrie der Platte 40 wird durch zwei im Mittelabschnitt 41 ausgebildete, sich diametral gegenüberliegenden Öffnungen 43 und 44, zwischen denen die Öffnung 46 angeordnet ist, und durch zwei im Rand des Randabschnitts 42 ausgebildete, sich ebenfalls diametral gegenüberliegende Einbuchtungen 49 gebrochen. Die beiden Einbuchtungen 49, die Öffnungen 43 und 44 und das Durchloch 46 sind auf einer in den Fig. 1, 3 und 4 jeweils von links nach rechts verlaufenden Symmetrielinie angeordnet. Fig. 1 zeigt eine Ansicht der Einrichtung 40 von unten, Fig. 4 eine Draufsicht von oben, Fig. 2 einen Querschnitt geschnitten durch die in Fig. 1 von links nach rechts verlaufende Symmetrielinie und Fig. 5 einen Querschnitt durch die in den Figuren 1 und 4 von oben nach unten verlaufende Symmetrielinie der Abdicht- und Positioniereinrichtung 40.

Wie am besten in Fig. 2 zu sehen ist, sind die Öffnungen 43 und 44 als Kanäle 43' und 44' ausgebildet. Beide Kanäle 43' und 44' sind an ihrem oberseitigen Ende stumpfkegelförmig ausgebildet (vergleiche Figuren 2 und 4) und erstrecken sich von dieser Ausnehmung in Richtung zur Unterseite 50 der Einrichtung 40 (in Fig. 2 nach unten) und zur Rotationssymmetrieachse hin geneigt. An der Unterseite 50 der Einrichtung 40 münden die Kanäle 43' und 44' in Öffnungen. Diese Öffnungen sind deckungsgleich bzw. fluchtend mit den Durchlöchern 23 im oberseitigen Flansch 21 des Einsatzelements 20, wenn das Einsatzelement 20 in einer passenden Drehorientierung an der Einrichtung 40 angesetzt (vormontiert) ist bzw. umgekehrt die Einrichtung 40 in der passenden Drehorientierung auf das Einsatzelement 20 aufgelegt ist, wie am besten in Fig. 2 zu sehen ist.

Die Einbuchtungen 49 im Randabschnitt 42 der Einrichtung 40 dienen dazu, dass eine Greifeinrichtung die Einrichtung 40 leicht um ihre Rotationssymmetrieachse in die passende Drehorientierung drehen kann, in der die Öffnungen 43 und 44 an der Unterseite 50 der Einrichtung 40 mit den Durchlöchern 23 im oberseitigen Flansch 21 des Einsatzelements 20 fluchten. Die Einrichtung 40 ist zwischen ihrer Oberseite 48 und ihrer Unterseite 50 in den Bereichen außerhalb der Öffnungen 43, 44 und 46 nicht notwendigerweise massiv ausgebildet, sondern kann parallel zu der Rotationssymmetrieachse und senkrecht in Bezug auf die Unterseite 50 stehende Verstärkungswände aufweisen, wie in den Figuren 3 und 4 in Aufsicht und in Fig. 5 im Querschnitt zu sehen ist.

Seitlich der zentrierten Öffnung 46 sind zwei sich diametral gegenüberstehend und aufeinander zu weisend ausgerichtete Widerhaken 47 ausgebildet, wie am besten in Draufsicht in Fig. 4 und im Querschnitt in Fig. 5 zu sehen ist. Die Widerhaken 47 weisen konstruktionsbedingt eine Flexibilität bzw. Elastizität auf, aufgrund derer sie von der Öffnung 46 in entgegengesetzten Richtungen voneinander weg gebogen werden können und dabei eine zur Öffnung 46 hin gerichtete elastische Kraft ausüben können.

An der Unterseite 50 der Einrichtung 40 ist im Mittelabschnitt ein in Fig. 2 nach unten weisender Vorsprung 52 mit einer vorbestimmten Vorsprunghöhe 53 ausgebildet, wie am besten in der Detailansicht der Fig. 2 zu sehen ist. Die Vorsprunghöhe 53 beträgt vorzugsweise 0,03 mm. Der Vorsprung 52 überdeckt die Öffnungen der Kanäle 43' und 44', und dient dazu, dass, wenn die Einrichtung 40 mit dem daran lösbar verbundenen Einsatzelement 20 an die Ausnehmung 12 herangeführt (wie in Fig. 6 gezeigt) und dann abgesenkt worden ist, bis die Unterseite 50 der Einrichtung 40 auf der Paneeloberfläche 13 des Paneelvorprodukts 11 aufliegt, das Einsatzelement 20 exakt in einer gewünschten Verankerungsposition positioniert ist, in der die oberseitige Fläche 22 des oberseitigen Flanschs 21 des Einsatzelements um die Vorsprunghöhe 53 unterhalb der Paneeloberfläche 13 angeordnet ist und jedenfalls sicher nicht über die Paneeloberfläche 13 aus der Ausnehmung 12 herausragt.

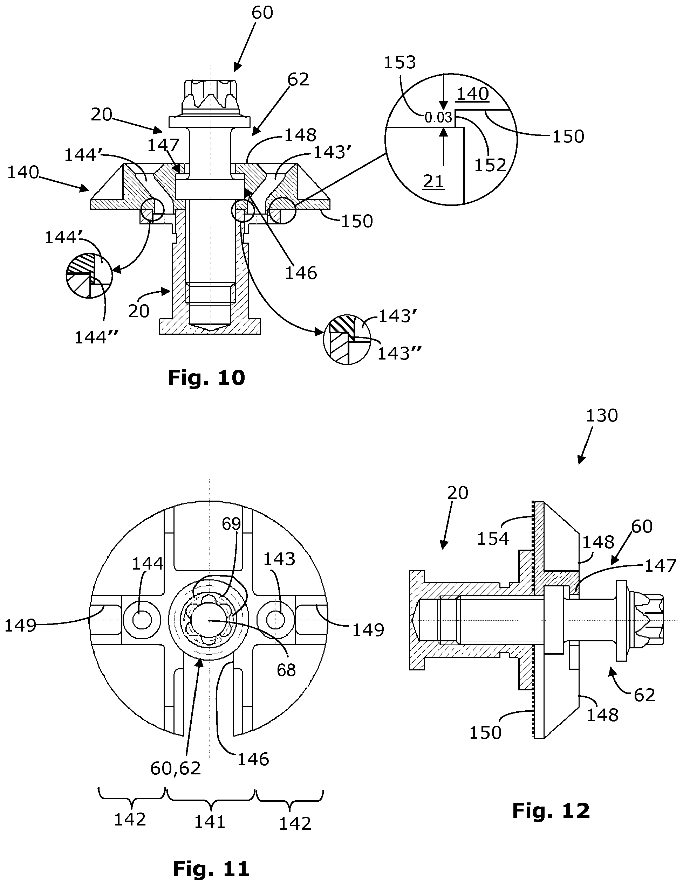

Die Spezialschraube 62 kann auf einer Oberseite ihres Schraubenkopfes 64 eine zentrische Markierung 68 (siehe Fig. 3 und 11) aufweisen. Die zentrische Markierung 68 ermöglicht mit optischen Mitteln (nicht gezeigt) eine optische Verifikation der geometrischen Position der Schraube 62 in einem voll- oder teilautomatisierten Prozess und, wenn die Schraube 62 die Einrichtung 40 mit dem Einsatz 20 vormontiert hat bzw. verbindet, auch der geometrischen Position des Einsatzes 20. Die zentrische Markierung 68 ist etwa ein besonders markierter Mittelpunkt auf einer Oberfläche des Außensechsrunds 66 des Schraubenkopfes 64. Auf einem Umkreis bzw. Kreis um den Außensechsrund 66 können eine oder mehrere voneinander unterscheidbare Markierungen 69, etwa Nummerierungen der einzelnen Teilabschnitte des Außensechsrunds 66 (siehe Fig. 11), vorgesehen sein. Die Markierungen 69 sind jeweils in einer Draufsicht (siehe Fig. 11) mit optischen Mitteln (nicht gezeigt) erkennbar und ermöglichen eine optische Verifikation einer Drehwinkelposition der Schraube 62 in einem voll- oder teilautomatisierten Prozess.

Die Tiefe der Bohrung 28 und der Gewindebohrung 29 in dem Einsatzelement 20 gemessen von der oberseitigen Fläche 22 des Einsatzelements 20 sind vorbestimmt und abgestimmt auf die Länge des Schraubengewindes 78 der Spezialschraube 62 und die Dicke einer unterseitigen Wand (nicht bezeichnet) der Einrichtung 40, genauer gesagt der Abstand von der Unterseite 50 der Einrichtung 40 bis zur Anschlagfläche in der Öffnung 46 der Einrichtung 40, wenn das Schraubengewinde 78 der Spezialschraube 62 durch die Öffnung 46 der Einrichtung 40 hindurch gesteckt und in die Gewindebohrung 29 des Einsatzes 20 hineingeschraubt ist, wie in Fig. 2 und 5 zu sehen ist.

Die in den Fig. 1, 3, 4 gezeigte Abdeck- und Positioniereinrichtung 40 gemäß der ersten Ausführungsform und die in Fig. 11 gezeigte Abdeck- und Positioniereinrichtung 140 bestehen aus einem transparenten Material, beispielsweise C-PET oder PMMA. Dadurch kann der Vorgang des Einfüllens des Füllfluids 15 in den Zwischenraum 16 während des Einfüllens bei Bedarf optisch bzw. visuell durch die Einrichtung 40, 140 hindurch beobachtet werden, wie in Fig. 7 zu erkennen ist.

Die beiden kleineren, sich diametral gegenüberliegenden Öffnungen 43 und 44 der Einrichtung 40 (siehe Fig. 1) und die Öffnungen 143, 144 der Einrichtung 140 (siehe Fig. 11) dienen zum Einfüllen des Füllfluids 15 in den Zwischenraum 16 zwischen dem Einsatzelement 20 und der Begrenzung 14 der Ausnehmung 12. Vor dem Befüllen wird das Einsatzelement 20 im vormontierten Zustand, d.h. in der durch das Verbindungselement 60 (die Spezialschraube 62) vermittelten Verbindung mit der Einrichtung 40 (siehe Fig. 7) bzw. 140 in die Ausnehmung 12 eingeführt und zentriert, wobei die Unterseite 50 der Einrichtung 40 auf der Paneeloberfläche 13 aufliegt. Dann wird die Auslassöffnung 106 des Vorratsbehälters 104 des Dosierautomaten 102 an die eine, dann als Einfüllöffnung dienende Öffnung 43 bzw. 143 herangeführt. Dann wird das Füllfluid 15 aus dem Vorratsbehälter 104 in den Zwischenraum 16 eingefüllt wird, wie in Fig. 7 angedeutet. Die andere Öffnung 44 bzw. 144 der Einrichtung 40 bzw. 140 dient als Auslassöffnung 44 bzw. 144, und zwar ab dem Moment, wo das viskose Füllfluid 15 beginnt, aus der Auslassöffnung 44 bzw. 144 auszutreten, nachdem der Zwischenraum 16 im Wesentlichen vollständig mit dem Füllfluid 15 gefüllt worden ist. Dabei sind die Viskosität des einzufüllenden Füllfluids 15, die Querschnittsfläche der Auslassöffnung 106, die Querschnittsfläche der Einfüllöffnung 43 bzw. des Einfüllkanals 43', die Querschnittsfläche des von dem Füllfluid beim Befüllen durchströmten Zwischenraums 16, die Querschnittsfläche der Auslassöffnung 44 bzw. des Auslasskanals 44' und die Einfüllrate des Füllfluids 15, d.h. die Menge eingebrachten Füllfluids 15 pro Zeiteinheit, aufeinander abgestimmt, um ein zügiges Befüllen des Zwischenraums 16 mit dem Füllfluid 15 zu gewährleisten.

Nachdem beim Befüllen das Füllfluid 15 den Zwischenraum 16 vollständig ausgefüllt hat, tritt das Füllfluid 15 durch die Auslassöffnung 44 bzw. 144 aus und aktiviert dabei die als Sensoreinrichtung 120 dienende Lichtschrankeneinrichtung 122. Die Lichtschrankeneinrichtung 122 umfasst, wie bereits erwähnt, eine seitlich an dem Auslasskanal 44' bzw. 144' angeordnete Lichtquelle 124, etwa eine LED 125, und eine in Bezug auf die Lichtquelle 124 auf der gegenüberliegenden Seite des Auslasskanals 44', 144' angeordneten Lichtsensor 126 sowie erforderliche elektrische Schaltungen zum Versorgen der Lichtquelle 124, zum Auslesen des Lichtsensors 126 und zum Erzeugen eines Ausgangssignals, wenn die Lichtschrankeneinrichtung 122 aktiviert wird. Das Ausgangssignal der Lichtschrankeneinrichtung 122 wird einer Dosiereinrichtung zugeführt, die den Ausfluss des Füllfluids 15 aus der Auslassöffnung 106 des Dosierautomaten 102 stoppt, etwa durch Verschließen der Auslassöffnung 106.

Das Füllfluid 15 ist ein selbstaushärtendes bzw. ein aushärtbares Füllfluid. Das Füllfluid 15 kann ein selbst rasch aushärtender Schaum, alternativ auch ein selbsthärtender bzw. elastisch aushärtender Klebstoff sein. Die Funktion des Füllfluids 15 ist es, im ausgehärteten Zustand das Einsatzelement 20 fest, d.h. mit einer vorbestimmten Zugbelastbarkeit, in der Ausnehmung 12 zu verankern. Je nach Wahl des Materials des Füllfluids 15 kann das Aushärten thermisch (etwa durch Erwärmen), optisch (etwa durch Einstrahlen von Licht, Infrarot- oder UV-Strahlung) oder durch anderweitiges Zuführen einer für das Aushärten erforderlichen Aktivierungsenergie beschleunigt werden.

Die Aushärtezeit des Füllfluids 15 ist in der Regel nach Herstellerangaben vorbestimmt, um bei einem selbstaushärtenden Füllfluid ein vollständiges Aushärten des eingefüllten Füllfluids 15 sicherzustellen. Bei einem aushärtbaren Füllfluid ist die Aushärtezeit gemäß dem auszuführenden Aushärteverfahren verfahrensabhängig ebenfalls nach Herstellerangaben vorgegeben. Der oben mit Verweis auf die Fig. 8 beschriebene Zugtest wird jedenfalls erst nach einem vollständigen Aushärten des in die Ausnehmung eingefüllten Füllfluids 15 ausgeführt. Zum Einhalten der von einem Hersteller des Füllfluids 15 vorgegebenen Aushärtezeit kann eine entsprechende Zeitsteuerung vorgesehen sein, die das Ende des Aushärtevorgangs anzeigt bzw. mitteilt.

Nach Beendigung des Aushärtevorgangs wird als Qualitätstest ein Zugbelastungstest zum Testen der Zugbelastbarkeit des in der Ausnehmung 12 verankerten Einsatzelements 20 durchgeführt, wie in Fig. 8 angedeutet. Anschließend wird durch Betätigen der Verbindungseinrichtung 60 die Verbindung zwischen der Abdeck- und Positioniereinrichtung 40, 140 und dem Einsatzelement 20 gelöst. Die Einrichtung 40 und die Verbindungseinrichtung 60 werden weggeführt, und das in die Ausnehmung 12 eingesetzte und mittels des Füllfluids 15 dort fixierte Einsatzelement 20 verbleibt in der Ausnehmung 12, wie in Fig. 9 gezeigt.

Ein Paneelvorprodukt 11 ist nicht notwendigerweise über seine gesamte Flächenausdehnung eben. Es kann auch gewölbte Abschnitte aufweisen und ein über seine gesamte Flächenausdehnung auch für Spezialanwendungen geformtes Paneelteil sein, das je nach Anwendung auch Ansatzbereiche oder abgeknickte Bereiche aufweist, die zur Montage und Verwendung mit anderen Paneelprodukten oder Teilen eines Raumfahrt- oder Luftfahrzeugs verbunden werden können. Ein Paneelvorprodukt 11 umfasst in der Regel nicht nur eine, sondern zwei oder auch mehrere Ausnehmungen 12, in die jeweils die Einsatzelemente 20 einzusetzen sind, um das Paneelprodukt 10 fertig zu stellen.

Unter einem Paneelvorprodukt 11 bzw. einem Paneelprodukt 10 ist hierin ein Bauteil zu verstehen, das in Leichtbauweise aufgebaut ist, das zumindest abschnittsweise als planparallele Wand mit an beiden Wandseiten (Paneeloberflächen 13) vorgesehenen Deckschichten aufgebaut und zumindest teilweise mit in den Deckschichten eingebrachten Ausnehmungen 12 ausgebildet ist. Zwischen den beiden Deckschichten ist ein Grundmaterial 17 vorgesehen, das aus einer Vielzahl von Gerüstelementen 18, etwa parallelen Verstrebungsflächen oder Verstrebungsstegen, oder aber meist aus einer Vielzahl von hexagonförmigen Wabenelementen besteht.

In dem in den Fig. 10 bis 12 gezeigten zweiten Ausführungsbeispiel der Erfindung können das Einsatzelement 20 und das Verbindungselement 60 bzw. die Spezialschraube 62 in gleicher Weise ausgeführt sein wie in dem ersten Ausführungsbeispiel. Das zweite Ausführungsbeispiel unterscheidet sich von dem ersten Ausführungsbeispiel durch die nachfolgend beschriebene besondere Ausgestaltung der Abdeck- und Positioniereinrichtung 140.

Die Abdeck- und Positioniereinrichtung 140 weist an ihrer Unterseite 150 um dort ausgebildete Öffnungen (Einfüllöffnung 143 und Auslassöffnung 144) herum ausgebildete Kanalfortsätze 143" und 144" auf, wie in den beiden entsprechenden Detailabbildungen der Fig. 10 zu sehen ist. So ist um die Einfüllöffnung 143 der Einrichtung 140 an der Unterseite 150 der den Auslass des Einfüllkanals 143' umringende Einfüllkanalfortsatz 143" ausgebildet, der von der Unterseite 150 in Fig. 10 nach unten, d.h. in Richtung zu dem anzusetzenden Einsatzelement 20 von der Unterseite 150, hervorspringt. Wenn das Einsatzelement 20 an der Unterseite 150 des Einsatzelements 140 vormontiert ist, ragt der Kanalfortsatz 143" in das entsprechende Durchloch 23 im oberseitigen Flansch 21 hinein. Entsprechend ist um die Auslassöffnung 144 herum an der Unterseite 150 der Einrichtung 140 ein Auslasskanalfortsatz 144" ausgebildet, der den Auslasskanal 144' in Fig. 10 nach unten fortsetzt und in das entsprechend andere Durchloch 23 im oberseitigen Flansch 21 des Einsatzelements 20 hineinragt. Der Einfüllkanalfortsatz 143" und der Auslasskanalfortsatz 144" dienen dazu, die Abdeck- und Positioniereinrichtung 140 leichter von dem eingesetzten und in der Ausnehmung fixierten Einsatzelement 20 zu lösen, insbesondere um einen besseren Abriss des ausgehärteten Füllfluids 15 nach bzw. bei der Demontage (vgl. Fig. 9) zu erreichen. Selbstverständlich können auch bei der Abdeck- und Positioniereinrichtung 40 gemäß dem ersten Ausführungsbeispiel an ihrer Unterseite 50 Kanalfortsätze (nicht gezeigt), die ähnlich wie die in Fig. 10 gezeigten Kanalfortsätze 143" und 144" der Einrichtung 140 gemäß der zweiten Ausführungsform ausgebildet sind, vorgesehen sein.

In Zusammenfassung des hiervor mit Verweis auf die Fig. 1 bis 12 veranschaulichten ersten und zweiten Ausführungsbeispiele umfasst das erfindungsgemäße System eine Spezialschraube 62, die aus handelsüblichem Stahl oder auch aus Titan hergestellt sein kann und einen Schraubenkragen 74 aufweist, sowie eine Abdeck- und Positioniereinrichtung 40, 140 aus einem transparenten Material, etwa einem Kunststoffmaterial wie C-PET oder PMMA, und mit einer als Einfüllkanal 43', 143' ausgebildeten Einfüllöffnung 43, 143 und einer als Auslasskanal 44', 144' ausgebildeten Auslassöffnung 44, 144. Die Einrichtung 40, 140 wird wie nachfolgend beschrieben zum Einsetzen und Fixieren des Einsatzelements 20 und zum Verankern desselben in der Ausnehmung 12 des Paneelvorprodukts 11 mittels eines Füllfluids 15, etwa durch Einschäumen, verwendet. Das einzusetzende und zu fixierende Einsatzelement 20 wird mittels der Spezialschraube 62 an der Unterseite 50, 150 der Abdeck- und Positioniereinrichtung 40, 140 befestigt. Ein symmetrisch um eine zentrale Öffnung 46, 146 in der Einrichtung 40, 140 ausgebildete Öffnung angeordnetes Paar von Widerhaken 47 arretiert den Schraubenkragen 74 der Spezialschraube 62 in der Einrichtung 40, 140 und ermöglicht somit ein automatisches bzw. automatisiertes Abziehen der Einrichtung 40 von dem Einsatzelement 20 bei der Demontage, genauer nach dem Abschrauben der Einrichtung 40, 140 von dem Einsatzelement 20.

Als konstruktive Besonderheit der Abdeck- und Positioniereinrichtungen 40, 140 ist ein Mittelabschnitt 41, 141 der Einrichtung 40 (wie in den Detailzeichnungen der Fig. 2 und 10 gezeigt) in Bezug auf den Randabschnitt 42, 142 der Einrichtung 40 von der Unterseite 50, 150 abgesetzt (in den Fig. 2 und 10 nach unten abgesetzt), und einen Vorsprung 52, 152 mit einer vorbestimmten Vorsprunghöhe 53, etwa 0,03 mm, ausgebildet. Durch den Vorsprung 52, 152 des Mittelabschnitts 41, 141 ist das Einsatzelement 20 im vormontierten, d.h. in dem mit der Einrichtung 40, 140 verbundenen Zustand um die Vorsprunghöhe 53, 153 tiefer in der Ausnehmung angeordnet als im Vergleich zur Paneeloberfläche 13. Dadurch ist sichergestellt, dass das Einsatzelement 20 nicht aus der Paneeloberfläche 13 hervorsteht.

In den beiden beschriebenen Ausführungsbeispielen - dem ersten gemäß den Fig. 1 bis 9 und dem zweiten gemäß den Fig. 10 bis 12 - weist die Spezialschraube 62 an ihrem Schraubenkopf 64 auf einer Oberfläche des Außensechsrunds 66 eine zentrische Markierung 68 (siehe Fig. 3 und 11) auf, die für eine Positionsbestimmung für optische Hilfseinrichtungen bzw. visuelle Beobachtung geeignet ist. Für ein leichtes und optimales Zusammenwirken mit einer automatischen Schraubeinrichtung ist die Spezialschraube 62 an ihrem Schraubenkopf 64 mit einem Außensechsrund 66 ausgebildet. Jedoch sind dem Fachmann auch andere Kopfformen bekannt, die ein relativ leicht automatisierbares Zusammenwirken des Schraubenkopfes mit automatischen Schraubern ermöglicht.

Falls erforderlich, kann auf der Unterseite 50, 150 der Abdeck- und Positioniereinrichtung 40, 140 ein schwach haftender Klebstofffilm 54, 154 aufgebracht sein, um ein Verrutschen der Einrichtung 40, 140 bzw. des daran damit verbundenen Einsatzelements 20 beim Einfüllen des Füllfluids 15 in den Zwischenraum 16 der Ausnehmung 12 bzw. bei der Handhabung der Paneelvorprodukte 11 während des Aushärtens des Füllfluids zu verhindern.

Die mechanischen Schnittstellen der Abdeck- und Positioniereinrichtung 40, 140, insbesondere deren Dicke (des Abstands von deren Oberseite 48, 148 zu deren Unterseite 50, 150), die Positionen der Einfüllöffnung 43, 143 und der Auslassöffnung 44, 144, die Ausgestaltung (Form) der Einfüllöffnung 43, 143 an der Oberseite 48, 148 (erforderlich für das Heranführen des Dosierautomaten 102 (etwa eines Schaumdispensers) bzw. die Abdichtung mit dessen Auslassöffnung 106) zum automatisierten Zuführen des Füllfluids 15 in und durch die Einrichtung 40, 140 hindurch, sowie die Form und Ausgestaltung der Auslassöffnung 44, 144 an der Oberseite 48, 148 mit der dort anzubringenden der Lichtschrankeneinrichtung 122 sind für eine Automatisierung genau zu spezifizieren. Des Weiteren ist das Schraubengewinde 78 der Schraube 62 normiert auf bzw. angepasst an die bei den kommerziell erhältlichen Einsatzelementen 20 üblichen Standardmaße M4, M5 und M6 der Gewindebohrung 29. Die Form des Schraubenkopfs 64 der Schraube 62 ist normiert, um häufigen Werkzeugwechsel (Wechsel des Werkzeugs 94 bzw. der Betätigungseinrichtung 92 für die Spezialschraube 62) bei der Montage und Demontage, d.h. den Schraubvorgängen (siehe Fig. 8), zu vermeiden. Auch ist die Ausgestaltung des Griffabschnitts 70 bzw. des Schraubenhalses 71 der Schraube 62 normiert, um die Ausgestaltung des beanspruchten Systems für den mechanischen Zug- bzw. Belastungstest (Beaufschlagen der Prüfzugkraft 118 wie in Fig. 8 veranschaulicht).

In dem zweiten Ausführungsbeispiel der Fig. 10 bis 12 weist die Abdeck- und Positioniereinrichtung 140 einen seitlichen Einschnitt 146 auf, der sich durch den Randabschnitt 142 bis in den Mittelabschnitt 141 erstreckt und die Mitte der Einrichtung enthält, auf. So kann die Spezialschraube 62 leicht seitlich in die Abdeck- und Positioniereinrichtung 140 eingeführt werden, wie aus Fig. 11 ersichtlich ist. Ferner umfassen der Einfüllkanal 143' und der Auslasskanal 144' jeweilige Kanalfortsätze 143" und 144" (siehe Detailzeichnungen der Fig. 10), die im vormontierten Zustand in die entsprechenden Durchlöcher 23 im Flansch 21 des Einsatzelements 20 hineinragen. Dadurch wird ein besserer Abriss des Füllfluids 15 (etwa des Schaums) beim Demontieren der Einrichtung 140 (vgl. Fig. 9) erreicht.

Nachfolgend wird noch ein beispielhaftes erfindungsgemäßes Verfahren zum Herstellen des Paneelprodukts 10 in Einzelheiten beschrieben.

Zur Montage des das Einsatzelement 20, die Einrichtung 40, 140 und das Verbindungselement 60 (Spezialschraube 62) umfassenden Verbundelements werden eine oder eine Vielzahl von Einsatzelementen 20 in einem Magazin angeordnet und für eine automatische Weiterverarbeitung vorbereitet. Anschließend wird die Abdeck- und Positioniereinrichtung 40, 140 mittels der Einbuchtungen 49, 149 (siehe Fig. 1 und 11) so in Bezug auf das Einsatzelement 20 ausgerichtet, dass der Einlasskanal 43', 143' und der Auslasskanal 44', 144' der Einrichtung 40, 140 mit den entsprechenden Durchlöchern 23 im oberseitigen Flansch 21 des Einsatzelements 20 fluchten. Dann wird manuell oder automatisch die Spezialschraube 62 in die Gewindebohrung 29 des Einsatzelements 20 geschraubt, so dass der Schraubenkragen 74 der Spezialschraube 62 die Einrichtung 40, 140 an das Einsatzelement 20 anpresst, wobei die Unterseite 50, 150 der Einrichtung 40 auf der oberseitigen Fläche 22 des oberseitigen Flanschs 21 des Einsatzelements 20 aufliegt. Die entsprechende Anpresskraft wird mit Hilfe eines Anzugsmoments der Spezialschraube 62 so gewählt, dass ein späteres Verrutschen des Einsatzelements 20 in Bezug auf die Einrichtung 40, 140 während des weiteren Verfahrens verhindert wird. Während des Einschraubens drückt der Schraubenkragen 74 mit seiner unteren Anschlagfläche 76 die beiderseits der Öffnung 46, 146 der Einrichtung 40, 140 angeordneten Widerhaken 47, 147 elastisch zur Seite und die Widerhaken federn zurück, sobald der Schraubenkragen 74 die Widerhaken 47, 147 passiert hat.

Zum Einführen und Positionieren des Einsatzelements 20 in die Ausnehmung 12 des Paneelvorprodukts 11 wird das (das Einsatzelement 20 umfassende) Verbundelement mittels einer automatisch angesteuerten ersten Armeinrichtung 80 (etwa einem ersten Roboterarm) mit einer ersten Verbindungsgreifeinrichtung 82 wie in Fig. 6 veranschaulicht zu der Ausnehmung 12 geführt und positioniert, bis die Unterseite 50 der Einrichtung 40 auf der Paneeloberfläche 13 aufliegt, wobei das Einsatzelement 20 in die Ausnehmung 12 eingeführt und in seiner vorgesehenen Position positioniert ist. Dann fixiert die erste Verbindungsgreifeinrichtung 82 der ersten Armeinrichtung 80 das Verbundelement während des Einfüllens des Füllfluids 15. Alternativ oder zusätzlich fixiert ein auf der Unterseite 50, 150 der Einrichtung 40, 140 aufgebrachter, schwach haftender Klebstofffilm 54, 154 die Einrichtung 40, 140 auf der Paneeloberfläche 13 durch Haftvermittlung mit der Paneeloberfläche 13 im Bereich um die Ausnehmung 12 herum.

Zum Einfüllen des Füllfluids 15 in den Zwischenraum 12 zwischen der Begrenzung 14 der Ausnehmung 12 und dem in die Ausnehmung 12 positionierten Einsatzelement 20 werden mittels einer dritten Armeinrichtung 100 der automatische Dosierautomat 102 (etwa ein Schaumdispenser), wie in Fig. 7 gezeigt, in Position, d.h. in Eingriff mit der Einlassöffnung 43 der Einrichtung 40 gebracht. Ferner wird die Sensoreinrichtung 120, etwa eine Lichtschrankeneinrichtung 122 zum Überwachen der Auslassöffnung 44 und Detektieren des Austretens von Füllfluid aus der Auslassöffnung 44 an der Auslassöffnung 44 in Position bzw. in Betriebsbereitschaft gebracht. Der Dosierautomat 102 wird an die Einlassöffnung 43 gepresst, wobei die Auslassöffnung 106 in die Einfüllöffnung 43 eingreift und dort abdichtet. Dann wird der Zwischenraum 16 in der Ausnehmung 12 des Paneelvorprodukts 11 durch den Einlasskanal 43' und das entsprechende Durchloch 23 im Flansch 21 des Einsatzelements 20 hindurch mit dem härtenden bzw. auszuhärtenden Füllfluid (etwa dem selbsthärtenden Schaum) befüllt. Wenn der Zwischenraum 16 vollständig mit Füllfluid gefüllt ist, steigt das Füllfluid durch den Auslasskanal 44' in der Einrichtung 40 auf. An der Auslassöffnung 44 befindet sich die Lichtschrankeneinrichtung 122, die durch die transparente Einrichtung 40 hindurch die Lichtdurchlässigkeit des Auslasskanals 44' überwacht. Wenn das Füllfluid im Auslasskanal 44' die Position der Lichtschrankeneinrichtung 122 erreicht, wird die Lichtdurchlässigkeit verändert, die Lichtschrankeneinrichtung 122 aktiviert, das Ausgangssignal ausgegeben und der Befüllvorgang aufgrund der Veränderung des Ausgangssignals gestoppt. Der Dosierautomat 122 wird anschließend mittels der dritten Armeinrichtung automatisch wieder weggeführt.

Als Qualitätskontrolle und zum Sicherstellen einer vorbestimmten Zugbelastbarkeit wird nach dem vollständigen Aushärten des eingefüllten Füllfluids, wie in Fig. 8 veranschaulicht, ein Belastungszugtest an dem in die Ausnehmung 12 eingebrachten und durch das ausgehärtete Füllfluid 15 verankerten Einsatzelements durchgeführt. Dazu wird eine vierte Armeinrichtung 110 mit einer zweiten Verbindungsgreifeinrichtung 112 in eine Position über dem Verbundelement mit dem Einsatzelement 20 gebracht. Die zweite Verbindungsgreifeinrichtung 112 packt die Spezialschraube 62 an dem Griffabschnitt 70 (dem Schraubenhals 71 unterhalb des Schraubenkopfes 64) und beaufschlagt die Prüfzugkraft 118 in der durch den Pfeil 119 (siehe Fig. 8) angegebenen Richtung senkrecht zu der Paneeloberfläche 13 über die Spezialschraube 62 auf das Einsatzelement 20.

Falls dies zum Verifizieren bestimmter Genauigkeitsanforderungen bzw. -garantien erwünscht ist, kann nach dem Zugtest in dem in Fig. 8 veranschaulichten Zustand auch die genaue geometrische Lage der Drehsymmetrieachse des Einsatzelements 20 ermittelt werden. Dazu werden mit Hilfe eines optischen Messverfahrens die Position der zentrischen Markierung 68 oder die Positionen der anderen auf einem Kreisumfang des Schraubenkopfs 64 vorgesehenen Markierungen 68 bestimmt und ausgewertet.

Zur Demontage des Verbundelements wird der Spezialschraube 62, wie in Fig. 9 veranschaulicht, entweder manuell oder mit Hilfe einer vollautomatischen Schraubeinrichtung 90, 94 aus dem Einsatzelement 20 herausgeschraubt. Beim Ausschrauben der Spezialschraube 62 kommt der Schraubenkragen 74 in Kontakt mit den Widerhaken 47 der Einrichtung 40 und zieht dadurch die Einrichtung 40 weg von der Paneeloberfläche 13 in Richtung des Pfeils 119 (siehe Fig. 8). Dabei wird das gehärtete Füllfluid 15 in den Durchlöchern 23 des oberseitigen Flanschs 21 des Einsatzelements 20 von den Füllfluidresten im Einfüllkanal 43', 143' und im Auslasskanal 44', 144' getrennt, gegebenenfalls besser definiert durch die Kanalfortsätze 143" und 144".

Zur Überprüfung der Qualität des Gewindes der Gewindebohrung 29 in dem Einsatzelement 20 wird während des Demontagevorgangs (während des Ausdrehens der Spezialschraube 62) das Drehmoment gemessen und dessen Zeitverlauf aufgezeichnet. Nach dem Ausschrauben der Spezialschraube 62 und dem Entfernen der Einrichtung 40 verbleibt das Einsatzelement 20 durch das ausgehärtete Füllfluid 15 verankert zurück in der Ausnehmung 12.

Nach erfolgter Demontage kann die Spezialschraube 62 durch Öffnen oder Abbrechen der Widerhaken 47 von der gebrauchten Abdicht- und Positioniereinrichtung 40 entfernt werden und zum Einbringen bzw. Installieren von weiteren Einsatzelementen 20 in weiteren Ausnehmungen 12 des Paneelprodukts wiederverwendet werden.

### Industrielle Anwendbarkeit

Durch das erfindungsgemäße Verfahren und mittels des erfindungsgemäßen Systems wird das Installieren von Einsatzelementen 20 in Ausnehmungen 12 von Paneelvorprodukten 11 automatisiert durchführbar. Die Einsatzelemente 20 werden bisher manuell in die Ausnehmungen 12 eingesetzt und eingeschäumt, was arbeits-, zeit- und kostenaufwendig ist.

Durch das automatische Erfassen des Austritts des Füllfluids aus der Auslassöffnung bei der Installation eines Einsatzelements 20 wird sichergestellt, dass ein Einsatzelement 20 in einem automatisierten Prozess korrekt in einem Paneelvorprodukt (Leichtbaupaneel) 11 positioniert, vollständig mit Füllfluid ausgefüllt und mit einer Prüflast verifiziert werden kann.

Die in der Einrichtung 40, 140 vorgesehenen Einfüllkanäle 43', 143' ermöglichen ein automatisiertes und vollständiges Einfüllen des selbsthärtenden Füllfluids durch ein Durchloch 23 des Einsatzelements in den Zwischenraum 16 der Ausnehmung 12 des Paneelvorprodukts 11. Die am Auslasskanal 44', 144' bereitgestellte Sensoreinrichtung 120, etwa die optische Lichtschrankeneinrichtung 122, erfasst das Austreten des Füllfluids durch die transparente Abdicht- und Positioniereinrichtung 40, 144 und löst dabei das Beenden der Füllfluidzufuhr aus. Dies verhindert eine Verschmutzung bzw. Kontamination des Paneelprodukts 11 und der im Ablauf des Verfahrens eingesetzten Werkzeuge 62, 40, 140, 94, 80, 102, 110 und 90 aufgrund des Austritts von etwaig überschüssigen Füllfluids (Schaums).

Der Griffabschnitt 70 (Schraubenhals 71) der Verbindungseinrichtung 60 (der Spezialschraube 62) stellt eine mechanische Schnittstelle für ein automatisches Beaufschlagen einer Prüflast mittels einer Verbindungsbestimmungseinrichtung 112 in einer automatisierten Form bereit.

Durch die Ausgestaltung der Verbindungseinrichtung 60 als eine Spezialschraube 62 etwa mit einem die Automatisierung vereinfachenden Schraubenkopf 64 mit einem Außensechsrund 66 und einem normierten Schraubengewinde 78 wird ermöglicht, dass die Spezialschraube 62 automatisch unter Verwendung eines geeigneten Werkzeugs 94 (eines Außensechsrundschraubers 96) in einem voll- oder teilautomatisierten Prozess in die Gewindebohrung 29 des Einsatzelements 20 eingeschraubt und auch wieder ausgeschraubt werden kann.

Durch das in der Beschreibung offenbarte Zusammenspiel zwischen der Abdicht- und Positioniereinrichtung 40, 140 und der Spezialschraube 62 wird beim Ausschrauben der Schraube 62 (bei der Demontage des Verbundelements) auch die Einrichtung 40, 140 selbst automatisch von dem eingesetzten Einsatzelement 20 entfernt und eine saubere Trennung der Füllfluid (Schaum)-Rückstände in bzw. an der Einrichtung 40, 140 von dem ausgehärteten Füllfluid in (den Durchlöchern 23) des Einsatzes bewirkt.

Wenn beim Ausschrauben der Spezialschraube 62 das Drehmoment ermittelt (der zeitliche Verlauf des Drehmoments aufgezeichnet) wird, kann beim Ausschrauben der Spezialschraube in einem voll- oder teilautomatisierten Prozess auch die Gewindequalität der Gewindebohrung 29 in dem Einsatzelement 20 verifiziert werden.

Dadurch, dass die Spezialschraube 62 wieder verwendbar ist, können zumindest einige der für die automatisierte Installation des Einsatzelements 20 in der Ausnehmung 12 erforderlichen Verbindungseinrichtungen 60 (Schraube 62) nach Gebrauch wiederverwendet werden.

Durch die konstruktive Ausgestaltung bzw. geometrische Formgebung des Einsatzelements 20, der Abdicht- und Positioniereinrichtung 40, 140 und der Spezialschraube 62 können diese in einem voll- oder teilautomatisierten Prozess mit Hilfe eines Schraubautomaten automatisiert als Verbundelement vormontiert und ebenso auch wieder demontiert werden.

Wenn beim Einschrauben in oder Lösen der Schraube 62 aus dem gequetschten Mittelabschnitt der Gewindebohrung 29 (bei der Einkerbung 24) des Einsatzelements 20 das dafür erforderliche Drehmoment automatisiert gemessen wird, erhält man ein Maß für die bei einer Verwendung der Paneelproduktvorrichtung 10 in der Schwerelosigkeit, etwa in einem Raumfahrzeug, Sicherungsqualität eines in die Gewindebohrung 29 des Einsatzelements 20 eingeschraubten Befestigungselements.

Durch die zentrische Markierung 68 auf dem Schraubenkopf 64 bzw. die eine oder mehreren auf einem Kreis am Umfang des Schraubenkopfs 64 vorgesehenen, voneinander unterscheidbaren Markierungen 69 der Spezialschraube 62 ist eine optische Verifikation der geometrischen Position des Einsatzelements 20 bzw. der Drehwinkelposition der Schraube 62 mit optischen bzw. visuellen Verfahren in einem voll- oder teilautomatisierten Prozess möglich.

### Bezugszeichenliste:

- 10: Paneelprodukt, Paneelproduktvorrichtung
- 11: Paneelvorprodukt
- 12: Ausnehmung
- 13: Paneeloberfläche
- 14: Begrenzung
- 15: Füllfluid
- 16: Zwischenraum
- 17: Grundmaterial
- 18: Gerüstelement
- 20: Einsatzelement
- 21: oberseitiger Flansch
- 22: oberseitige Fläche
- 23: Durchloch
- 24: Einkerbung
- 26: Bodenfläche
- 27: bodenseitiger Flansch
- 28: Bohrung
- 29: Gewindebohrung
- 30: Verbundgruppe
- 40: Abdeck- und Positioniereinrichtung
- 41: Mittelabschnitt
- 42: Randabschnitt
- 43: Einfüllöffnung
- 43': Einfüllkanal
- 44: Auslassöffnung
- 44': Auslasskanal
- 46: Öffnung
- 47: Widerhaken
- 48: Oberseite
- 49: Einbuchtung
- 50: Unterseite
- 52: Vorsprung
- 53: Vorsprungshöhe
- 54: Klebstofffilm
- 60: Verbindungseinrichtung
- 62: Spezialschraube
- 64: Schraubenkopf
- 66: Außensechsrund
- 68: zentrische Markierung
- 69: auf Kreis vorgesehene Markierung
- 70: Griffabschnitt
- 71: Schraubenhals
- 72: obere Anschlagfläche
- 74: Schraubenkragen
- 76: untere Anschlagfläche
- 78: Schraubengewinde
- 80: erste Armeinrichtung
- 82: erste Verbindungsgreifeinrichtung
- 84: Greiffläche
- 86: Greiffinger
- 90: zweite Armeinrichtung
- 92: Betätigungseinrichtung
- 94: Werkzeug
- 96: Außensechsrundschrauber
- 100: dritte Armeinrichtung
- 102: Dosierautomat
- 104: Vorratsbehälter
- 106: Auslassöffnung
- 110: vierte Armeinrichtung
- 112: zweite Verbindungsgreifeinrichtung
- 114: Greiffläche
- 116: Greiffinger
- 118: Prüfzugkraft
- 119: Pfeil
- 120: Sensoreinrichtung
- 122: Lichtschrankeneinrichtung
- 124: Lichtquelle
- 125: LED
- 126: Lichtsensor
- 130: Verbundgruppe
- 140: Abdeck- und Positioniereinrichtung
- 141: Mittelabschnitt
- 142: Randabschnitt
- 143: Einfüllöffnung
- 143': Einfüllkanal
- 143": Einfüllkanalfortsatz
- 144: Auslassöffnung
- 144': Auslasskanal
- 144": Auslasskanalfortsatz
- 146: Einschnitt
- 147: Gegenflansch bzw. Widerhaken
- 148: Oberseite
- 149: Einbuchtung
- 150: Unterseite
- 152: Vorsprung
- 153: Vorsprungshöhe
- 154: Klebstofffilm

## Patentansprüche

1. Verfahren zum Herstellen einer Paneelproduktvorrichtung (10), insbesondere für ein Luft- bzw. Raumfahrzeug, wobei ein Paneelvorprodukt (11) mit mindestens einer in einer Paneeloberfläche (13) ausgebildeten Ausnehmung (12) mit einer Begrenzung (14) und mindestens einem zum Verankern in einer der Ausnehmungen (12) vorgesehenen Einsatzelement (20) bereitgestellt ist, umfassend folgende Schritte:
- automatisiertes Einsetzen des Einsatzelements (20) in die Ausnehmung (12) des Paneelvorprodukts (11), und
- automatisiertes Befüllen eines Zwischenraums (16) zwischen dem Einsatzelement (20) und der Begrenzung (14) der Ausnehmung (12) mit einem aushärtbaren bzw. aushärtenden Füllfluid (15),
**dadurch gekennzeichnet, dass** das Einsatzelement (20) vor dem Einsetzen in die Ausnehmung (12) mit einer Abdicht- und Positioniereinrichtung (40, 140) nach einem der Ansprüche 6-14 lösbar verbunden wird, und dass der Schritt des Befüllens des Zwischenraums (16) folgende Schritte umfasst:
- Abdichten des Zwischenraums (16),
- Befüllen des Zwischenraums (16) mit dem Füllfluid (15) durch die Einfüllöffnung (43, 143) der Abdicht- und Positioniereinrichtung (40, 140) bis der Zwischenraum im Wesentlichen vollständig mit dem Füllfluid (44, 144) ausgefüllt ist, und
- Auslassen überschüssigen Füllfluids (15) aus dem Zwischenraum (16) durch die Auslassöffnung (44, 144) der Abdicht- und Positioniereinrichtung (40, 140).

2. System zum Herstellen einer Paneelproduktvorrichtung (10), in dem ein Paneelvorprodukt (11) mit mindestens einer in einer Paneeloberfläche (13) ausgebildeten Ausnehmung (12) mit einer Begrenzung (14) und mindestens einem zum Verankern in mindestens einer der Ausnehmungen (12) vorgesehenen Einsatzelement (20) bereitgestellt ist, umfassend:
- Mittel (40, 140; 110, 86) zum automatisierten Einsetzen des Einsatzelements (20) in die Ausnehmung (12) des Paneelvorprodukts (11), und
- Mittel (100, 104, 106, 120) zum automatisierten Befüllen eines Zwischenraums (16) zwischen dem Einsatzelement (20) und der Begrenzung (14) der Ausnehmung (12) mit einem aushärtbaren bzw. aushärtenden Füllfluid (15), **dadurch gekennzeichnet, dass**:
die automatisierten Befüllmittel eine Abdicht- und Positioniereinrichtung (40, 140) nach einem der Ansprüche 6-14 umfassen.

3. System nach Anspruch 2, **dadurch gekennzeichnet, dass** die Abdicht- und Positioniereinrichtung (40, 140) eine Unterseite (50, 150) aufweist und so ausgebildet ist, dass das Einsatzelement (20) an der Unterseite (50, 150) lösbar befestigt werden kann.

4. System nach einem der Ansprüche 2 oder 3, **dadurch gekennzeichnet, dass** die Einfüllöffnung (43, 143) in der Abdicht- und Positioniereinrichtung (40, 140) an einer Einfüllposition ausgebildet ist, die so gewählt ist, dass die Einfüllöffnung (43, 143) beim Aufliegen der Abdicht- und Positioniereinrichtung (40, 140) auf der Paneeloberfläche (13) in Fluidkommunikation mit einem ersten Teilraumbereich des Zwischenraums (16) ist,
die Auslassöffnung (44, 144) in der Abdicht- und Positioniereinrichtung (40, 140) an einer Auslassposition ausgebildet ist, die so gewählt ist, dass die Auslassöffnung (44, 144) beim Aufliegen der Abdicht- und Positioniereinrichtung (40, 140) auf der Paneeloberfläche (13) in Fluidkommunikation mit einem zweiten Teilraumbereich des Zwischenraums (16) ist,
wobei der zweite Teilraumbereich mit dem ersten Teilraumbereich in einer Fluidkommunikation mit Fluidpfaden durch den Zwischenraum (16) steht, wobei die Fluidpfade im Wesentlichen alle zum ersten und zweiten Teilraumbereich komplementären Teilraumbereiche des Zwischenraums erreichen.

5. System nach einem der Ansprüche 2 bis 4, **dadurch gekennzeichnet, dass** die Abdicht- und Positioniereinrichtung (40, 140) so ausgebildet ist, dass beim Aufliegen auf der Paneeloberfläche (13) eine bezüglich des Füllfluids (15) fluiddichte Abdichtung zwischen der Paneeloberfläche (13) und der Abdicht- und Positioniereinrichtung (40, 140) ausgebildet ist.

6. Abdicht- und Positioniereinrichtung (40, 140) mit einer Oberseite (48), einer Unterseite (50), einem Mittelabschnitt (41, 141) und einem den Mittelabschnitt (41, 141) umringenden Randabschnitt (42, 142), und geeignet zur Verwendung in einem Verfahren bzw. System zum Herstellen einer Paneelproduktvorrichtung (10), in dem ein Paneelvorprodukt (11) mit mindestens einer in einer Paneeloberfläche (13) ausgebildeten Ausnehmung (12) mit einer Begrenzung (14) und mindestens einem zum Verankern in mindestens einer der Ausnehmungen (12) vorgesehenen Einsatzelement (20) bereitgestellt ist, wobei das Einsatzelement (20) in die Ausnehmung (12) des Paneelvorprodukts (11) automatisiert eingesetzt wird und ein Zwischenraum (16) zwischen dem Einsatzelement (20) und der Begrenzung (14) der Ausnehmung (12) mit einem aushärtbaren bzw. aushärtenden Füllfluid (15) automatisiert befüllt wird, umfassend eine in dem Randabschnitt (42, 142) angeordnete Einfüllöffnung (43, 143) und eine in dem Randabschnitt (42, 142) im Wesentlichen der Einfüllöffnung (43, 143) diametral in Bezug auf den Mittelabschnitt (41, 141) gegenüberliegend angeordnete Auslassöffnung (44, 144), wobei die Einfüllöffnung (43, 143) und die Auslassöffnung (44, 144) sich durch die Abdicht- und Positioniereinrichtung (40, 140) hindurch erstrecken, **dadurch gekennzeichnet, dass** die Abdicht- und Positioniereinrichtung eine in dem Mittelabschnitt angeordnete Öffnung umfasst, wobei die Öffnung sich durch die Abdicht- und Positioniereinrichtung hindurch erstreckt.

7. Abdicht- und Positioniereinrichtung (40, 140) nach Anspruch 6, **dadurch gekennzeichnet, dass**
die Einfüllöffnung (43, 143) an der Oberseite (48) so ausgebildet ist, dass Füllfluid (15) an der Oberseite automatisiert eingefüllt und an der Unterseite (50), etwa in den Zwischenraum (16), wenn die Abdicht- und Positioniereinrichtung (40, 140) auf der Paneeloberfläche (13) über der Ausnehmung (12) aufgelegt ist, austreten kann, und dass die Auslassöffnung (44, 144) so ausgebildet ist, dass Füllfluid (15), etwa überschüssiges Füllfluid (15) aus dem Zwischenraum (16) an der Oberseite (48) austreten kann, wenn die Abdicht- und Positioniereinrichtung (40, 140) auf der Paneeloberfläche (13) über der Ausnehmung (12) aufgelegt ist, und von der Unterseite (50) her zur Oberseite (48) durch die Auslassöffnung (44, 144) hindurch treten kann.

8. Abdicht- und Positioniereinrichtung (40, 140) nach Anspruch 6 oder 7, **dadurch gekennzeichnet, dass** an deren Unterseite (50) der Mittelabschnitt (41, 141) in Bezug auf den Randabschnitt (42, 142) um eine vorbestimmte Vorsprunghöhe (53, 153), bevorzugt etwa 0,01 bis 0,05 mm, mehr bevorzugt etwa 0,03 mm, vorspringt.

9. Abdicht- und Positioniereinrichtung (40, 140) nach einem der Ansprüche 6 bis 8, **dadurch gekennzeichnet, dass** die Öffnung (46) einen, etwa nahe der Oberseite (48), umlaufenden oder abschnittsweise umlaufenden Widerhaken (47, 147) aufweist.

10. Abdicht- und Positioniereinrichtung (140) nach einem der Ansprüche 6 bis 9, **gekennzeichnet durch** einen ersten Kanalfortsatz (143"), der an der Unterseite (50) um einen Auslass der Einfüllöffnung (143) herum ausgebildet ist, und einen zweiten Kanalfortsatz (144"), der an der Unterseite (50) um einen Auslass der Auslassöffnung (144) herum ausgebildet ist.

11. Abdicht- und Positioniereinrichtung (40, 140) nach einem der Ansprüche 6 bis 10, **gekennzeichnet durch** eine oder mehrere an ihrem Umfang angeordnete Umfangsmarkierungen, die dazu geeignet sind, die Abdicht- und Positioniereinrichtung (40, 140) in eine vorbestimmte, reproduzierbare Drehposition in Bezug auf eine sich durch die zentrale Öffnung (46) hindurch erstreckende Achse, und die etwa in der Form von Einbuchtungen (49, 149) ausgebildet sind.

12. Abdicht- und Positioniereinrichtung (40, 140) nach einem der Ansprüche 6 bis 11, **gekennzeichnet durch** einen auf deren Unterseite (50, 150) aufgebrachten Klebstofffilm (54, 154).

13. Abdicht- und Positioniereinrichtung (40, 140) nach einem der Ansprüche 6 bis 12, **dadurch gekennzeichnet, dass** sie aus einem transparenten Material, wie etwa C-PET oder PMMA, hergestellt ist.

14. Abdicht- und Positioniereinrichtung (40, 140) nach einem der Ansprüche 6 bis 13, **gekennzeichnet durch** eine an der Oberseite am Auslass der Auslassöffnung (44, 144) angebrachten Sensoreinrichtung (120), die dazu ausgebildet ist, durch die Auslassöffnung (44, 144) hindurch tretendes Füllfluid (15) zu detektieren und etwa als Lichtschrankeneinrichtung (122) ausgebildet ist.

15. Montagehilfswerkzeugsatz zur Verwendung in einem Verfahren bzw. System zum Herstellen einer Paneelproduktvorrichtung (10), in dem ein Paneelvorprodukt (11) mit mindestens einer in einer Paneeloberfläche (13) ausgebildeten Ausnehmung (12) mit einer Begrenzung (14) und mindestens einem zum Verankern in mindestens einer der Ausnehmungen (12) vorgesehenen Einsatzelement (20) bereitgestellt ist, wobei das Einsatzelement (20) in die Ausnehmung (12) des Paneelvorprodukts (11) automatisiert eingesetzt wird und ein Zwischenraum (16) zwischen dem Einsatzelement (20) und der Begrenzung (14) der Ausnehmung (12) mit einem aushärtbaren bzw. aushärtenden Füllfluid (15) automatisiert befüllt wird, **gekennzeichnet durch:**
- eine Abdicht- und Positioniereinrichtung (40, 140) nach einem der Ansprüche 6-14, und
- eine Verbindungseinrichtung (60, 62) zum lösbaren Verbinden der Abdicht- und Positioniereinrichtung (40, 140) mit dem Einsatzelement (20).

## Claims

1. A method for producing a panel product device (10), in particular for an aircraft or spacecraft, wherein a panel pre-product (11) is provided with at least one recess (12) formed in a panel surface (13) with a delimitation (14) and at least one insert element (20) for anchoring in one of the recesses (12) comprising the following steps:
- automated insertion of the insert element (20) into the recess (12) in the panel pre-product (11) and
- automated filling of an intermediate space (16) between the insert element (20) and the delimitation (14) of the recess (12) with a curable or curing filling fluid (15),
**characterized in that** the insert element (20) is detachably connected to a sealing and positioning device (40, 140) according to claims 6-14 prior to insertion in the recess (12) and that the step of filling the intermediate space (16) comprises the following steps:
- sealing the intermediate space (16),
- filling the intermediate space (16) with the filling fluid (15) through the filling opening (43, 143) in the sealing and positioning device (40, 140) until the intermediate space is filled substantially completely with the filling fluid (44, 144) and
- releasing excess filling fluid (15) from the intermediate space (16) through the outlet opening (44, 144) in the sealing and positioning device (40, 140).

2. A system for producing a panel product device (10) in which a panel pre-product (11) is provided with at least one recess (12) formed in a panel surface (13) with a delimitation (14) and at least one insert element (20) for anchoring in at least one of the recesses (12), comprising:
- means (40, 140; 110, 86) for the automated insertion of the insert element (20) into the recess (12) in the panel pre-product (11) and
- means (100, 104, 106, 120) for the automated filling of an intermediate space (16) between the insert element (20) and the delimitation (14) of the recess (12) with a curable or curing filling liquid (15)
**characterized in that**:
the automated filling means comprise a sealing and positioning device (40, 140) according to one of claims 6-14.

3. The system according to claim 2, **characterized in that** the sealing and positioning device (40, 140) comprises a lower side (50, 150) and is configured in such a manner that the insert element (20) can be detachably fastened to the lower side (50, 150).

4. The system according to one of claims 2 or 3, **characterized in that** the filling opening (43, 143) is configured in the sealing and positioning device (40, 140) at a filling position which is selected in such a manner that the filling opening (43, 143) is in fluidic communication with a first partial volume region of the intermediate space (16) when the sealing and positioning device is laid on the panel surface (13), the outlet opening (44, 144) in the sealing and positioning device (40, 140) is configured at an outlet position that is selected in such a manner that the outlet opening (44, 144) is in fluidic communication with a second partial volume region of the intermediate space (16) when the sealing and positioning device (40, 140) is placed on the panel surface (13),
wherein the second partial volume region with the first partial volume region is in fluidic communication with fluid paths through the intermediate space (16), wherein the fluid paths substantially all reach partial volume regions of the intermediate space complementary to the first and second partial volume region.

5. The system according to one of claims 2 to 4, **characterized in that** the sealing and positioning device (40, 140) is configured in such a manner that during placement on the panel surface (13) a fluid-tight seal in respect of the filling fluid (15) is formed between the panel surface (13) and the sealing and positioning device (40, 140).

6. A sealing and positioning device (40, 140) with an upper side (48), a lower side (50), a centre portion (41, 141) and a peripheral portion (42, 142) surrounding the centre portion (41, 141) and suitable for use in a method or system for producing a panel product device (10) in which a panel pre-product (11) is supplied having at least one recess (12) formed in a panel surface (13) with a delimitation (14) and at least one insert element (20) for anchoring in at least one of the recesses (12), wherein the insert element (20) is inserted in automated fashion into the recess (12) of the panel pre-product (11) and an intermediate space (16) between the insert element (20) and the delimitation (14) of the recess (12) is filled in automated manner with a curable or curing filling fluid (15), comprising a filling opening (43, 143) arranged in the peripheral portion (42, 142) and an outlet opening (44, 144) arranged substantially diametrically opposite the filling opening (43, 143) in the peripheral region (42, 142) in respect of the centre portion (41, 141), wherein the filling opening (43, 143) and the outlet opening (44, 144) extend through the sealing and positioning device (40, 140), **characterized in that** the sealing and positioning device comprises an opening arranged in the centre portion, wherein the opening extends through the sealing and positioning device.

7. The sealing and positioning device (40, 140) according to claim 6, **characterized in that**
the filling opening (43, 143) is configured on the upper side (48) in such a manner that filling fluid (15) is filled in automated manner on the upper side and on the lower side (50), into the intermediate space (16), for example, when the sealing and positioning device (40, 140) is placed on the panel surface (13) over the recess (12) and that
the outlet opening (44, 144) is configured in such a manner that the filling fluid (15), for example excess filling fluid (15), can escape from the intermediate space (16) on the upper side (48) when the sealing and positioning device (40, 140) is placed on the panel surface (13) over the recess (12) and can pass from the lower side (50) to the upper side (48) through the outlet opening (44, 144).

8. The sealing and positioning device (40, 140) according to claim 6 or 7, **characterized in that** on the lower side (50) thereof the centre portion (41, 141) projects in respect of the peripheral portion (42, 142) by a predetermined projection height (53, 153), preferably of roughly 0.01 to 0.05 mm, more preferably of roughly 0.03 mm.

9. The sealing and positioning device (40, 140) according to one of claims 6 to 8, **characterized in that** the opening (46) comprises a barb (47, 147) circulating roughly proximate to the upper side (48) or circulating sectionally.

10. The sealing and positioning device (140) according to one of claims 6 to 9, **characterized by** a first channel extension (143") which is formed around the lower side (50) about an outlet of the filling opening (143) and a second channel extension (144") which is formed around the lower side (50) about an outlet of the outlet opening (144).

11. The sealing and positioning device (40, 140) according to one of claims 6 to 10, **characterized by** one or more circumferential markings arranged on its circumference which are suitable for configuring the sealing and positioning device (40, 140) in a predetermined, reproducible rotational position in respect of an axis extending through the central opening (46) and which are approximately in the form of indentations (49, 149) .

12. The sealing and positioning device (40, 140) according to one of claims 6 to 11, **characterized by** an adhesive film (54, 154) applied to the lower side (50, 150) thereof.

13. The sealing and positioning device (40, 140) according to one of claims 6 to 12, **characterized in that** it is made of a transparent material such as C-PET or PMMA, for example.

14. The sealing and positioning device (40, 140) according to one of claims 6 to 13, **characterized by** a sensor device (120) attached to the upper side at the outlet of the outlet opening (44, 144) which is designed to detect filling fluid (15) escaping through the outlet opening (44, 144) and is configured as a light-barrier device (122), for example.

15. A set of auxiliary assembly tools for use in a method or system for producing a panel product device (10) in which a panel pre-product (11) is supplied with at least one recess (12) formed in a panel surface (13) with a delimitation (14) and at least one insert element (20) for anchoring in at least one of the recesses (12), wherein the insert element (20) is inserted in automated manner into the recess (12) in the panel pre-product (11) and an intermediate space (16) between the insert element (20) and the delimitation (14) of the recess (12) is filled in automated manner with a curable or curing filling fluid (15), **characterized by**
- a sealing and positioning device (40, 140) according to one of claims 6-14 and
- a connection device (60, 62) for the detachable connection of the sealing and positioning device (40, 140) to the insert element (20).

## Revendications

1. Procédé pour la fabrication d'un dispositif de produit de panneau (10), en particulier pour un aéronef ou véhicule spatial, dans lequel un produit intermédiaire de panneau (11) est prévu avec au moins un évidement (12), formé dans une surface de panneau (13), avec une délimitation (14) et au moins un élément d'insertion (20) prévu pour l'ancrage dans l'un des évidements (12), comprenant les étapes suivantes :
- insertion automatisée de l'élément d'insertion (20) dans l'évidement (12) du produit intermédiaire de panneau (11), et
- le remplissage automatisé d'un interstice (16) entre l'élément d'insertion (20) et la délimitation (14) de l'évidement (12) avec un fluide de remplissage durcissable ou durcissant (15),
**caractérisé en ce que**, avant l'insertion dans l'évidement (12), l'élément d'insertion (20) est relié de façon détachable à un dispositif d'étanchement et de positionnement (40, 140) selon l'une des revendications 6-14, et que l'étape de remplissage de l'interstice (16) comprend les étapes suivantes :
- l'étanchement de l'interstice (16),
- le remplissage de l'interstice (16) avec un fluide de remplissage (15) à travers l'ouverture de remplissage (43, 143) du dispositif d'étanchement et de positionnement (40, 140) jusqu'à ce que l'interstice soit sensiblement complètement rempli par le fluide de remplissage (44, 144), et
- laisser s'écouler le fluide de remplissage (15) excédentaire hors de l'interstice (16) à travers l'ouverture de sortie (44, 144) du dispositif d'étanchement et de positionnement (40, 140).

2. Système pour la fabrication d'un dispositif de produit de panneau (10), dans lequel un produit intermédiaire de panneau (11) est prévu avec au moins un évidement (12), formé dans une surface de panneau (13), avec une délimitation (14) et au moins un élément d'insertion (20) prévu pour l'ancrage dans au moins l'un des évidements (12), comprenant :
- des moyens (40, 140 ; 110, 86) pour la mise en place automatisée de l'élément d'insertion (20) dans l'évidement (12) du produit intermédiaire de panneau (11), et
- des moyens (100, 104, 106, 120) pour le remplissage automatisé d'un interstice (16) entre l'élément d'insertion (20) et la délimitation (14) de l'évidement (12) avec un fluide de remplissage durcissable ou durcissant (15), **caractérisé en ce que** :
les moyens automatisés de remplissage comprennent un dispositif d'étanchement et de positionnement (40, 140) selon l'une des revendications 6-14.

3. Système selon la revendication 2, **caractérisé en ce que** le dispositif d'étanchement et de positionnement (40, 140) présente un dessous (50, 150) et est réalisé de manière à ce que l'élément d'insertion (20) puisse être fixé de manière détachable sur le dessous (40, 150) .

4. Système selon l'une des revendications 2 ou 3, **caractérisé en ce que** l'ouverture de remplissage (43, 143) dans le dispositif d'étanchement et de positionnement (40, 140) est formée au niveau d'une position de remplissage choisie de telle sorte que, lorsque le dispositif d'étanchement et de positionnement (40, 140) arrive à reposer sur la surface de panneau (13), l'ouverture de remplissage (43, 143) est en communication fluidique avec une première zone d'espace partiel de l'interstice (16), l'ouverture de sortie (44, 144) dans le dispositif d'étanchement et de positionnement (40, 140) est formée au niveau d'une position de sortie choisie de telles sorte que, lorsque le dispositif d'étanchement et de positionnement (40, 140) arrive à reposer sur la surface de panneau (13), l'ouverture de sortie (44, 144) est en communication fluidique avec une deuxième zone d'espace partiel de l'interstice (16),
dans lequel la deuxième zone d'espace partiel est en communication fluidique avec la première zone d'espace partiel avec des trajets de fluide à travers l'interstice (16), dans lequel les trajets de fluide atteignent sensiblement toutes les zones d'espace partiel complémentaires à la première et deuxième zone d'espace partiel de l'interstice.

5. Système selon l'une des revendications 2 à 4, **caractérisé en ce que** le dispositif d'étanchement et de positionnement (40, 140) est réalisé de manière à ce que, en reposant sur la surface de panneau (13), un étanchement aux fluides par rapport au fluide de remplissage (15) est réalisé entre la surface de panneau (13) et le dispositif d'étanchement et de positionnement (40, 140).

6. Dispositif d'étanchement et de positionnement (40, 140) avec un dessus (48), un dessous (50), une partie centrale (41, 141) et une partie de bord (42, 142) entourant la partie centrale (41, 141), et adapté pour l'utilisation dans un procédé ou système pour la fabrication d'un dispositif de produit de panneau (10) où un produit intermédiaire de panneau (11) est prévu avec au moins un évidement (12), formé dans une surface de panneau (13), avec une délimitation (14) et au moins un élément d'insertion (20) prévu pour l'ancrage dans au moins l'un des évidements (12), dans lequel l'élément d'insertion (20) est inséré de manière automatisée dans l'évidement (12) du produit intermédiaire de panneau (11) et un interstice (16) entre l'élément d'insertion (20) et la délimitation (14) de l'évidement (12) est rempli de manière automatisée avec un fluide de remplissage durcissable ou durcissant (15), comprenant une ouverture de remplissage (43, 143) disposée dans la partie de bord (42, 142) et une ouverture de sortie (44, 144) disposée dans la partie de bord (42, 142) de façon sensiblement diamétralement en vis-à-vis de l'ouverture de remplissage (43, 143) par rapport à la partie centrale (41, 141), dans lequel l'ouverture de remplissage (43, 143) et l'ouverture de sortie (44, 144) s'étendent à travers le dispositif d'étanchement et de positionnement (40, 140),
**caractérisé en ce que** le dispositif d'étanchement et de positionnement comprend une ouverture disposée dans la partie centrale, dans lequel l'ouverture s'étend à travers le dispositif d'étanchement et de positionnement.

7. Dispositif d'étanchement et de positionnement (40, 140) selon la revendication 6, **caractérisé en ce que** l'ouverture de remplissage (43, 143) est formée au niveau du dessus de manière à ce que l'on remplisse de façon automatisée avec du fluide de remplissage (15) au niveau du dessus (48), et que celui-ci puisse sortir au niveau du dessous (50), à peu près dans l'interstice (16), lorsque le dispositif d'étanchement et de positionnement (40, 140) est posé sur la surface de panneau (13) par-dessus l'évidement (12), et que l'ouverture de sortie (44, 144) est réalisée de manière à ce que le fluide de remplissage (15), par exemple du fluide de remplissage excédentaire (15), puisse sortir de l'interstice (16) au niveau du dessus (48) lorsque le dispositif d'étanchement et de positionnement (40, 140) est posé sur la surface de panneau (13) par-dessus l'évidement (12), et puisse passer depuis le dessous (50) vers le dessus (48) à travers l'ouverture de sortie (44, 144).

8. Dispositif d'étanchement et de positionnement (40, 140) selon la revendication 6 ou 7, **caractérisé en ce qu'**au niveau du dessous (50) de celui-ci, la partie centrale (41, 141) fait saillie par rapport à la partie de bord (42, 142) de l'ordre d'une hauteur de saillie (53, 153) prédéterminée, de préférence d'environ 0,01 à 0,05 mm, de manière davantage préférée d'environ 0,03 mm.

9. Dispositif d'étanchement et de positionnement (40, 140) selon l'une des revendications 6 à 8, **caractérisé en ce que** l'ouverture (46) présente une barbe (47, 147) périphérique ou partiellement périphérique, par exemple près du dessus (48).

10. Dispositif d'étanchement et de positionnement (140) selon l'une des revendications 6 à 9, **caractérisé par** un premier prolongement de canal (143''), lequel est formé au niveau du dessous (50) autour d'une sortie de l'ouverture de remplissage (143), et un deuxième prolongement de canal (144''), lequel est formé au niveau du dessous (50) autour d'une sortie de l'ouverture de sortie (144).

11. Dispositif d'étanchement et de positionnement (40, 140) selon l'une des revendications 6 à 10, **caractérisé par** un ou plusieurs marquages périphériques disposés sur la périphérie de celui-ci, lesquels conviennent pour amener le dispositif d'étanchement et de positionnement (40, 140) dans une position de rotation reproductible prédéfinie par rapport à un axe s'étendant à travers l'ouverture centrale (46), et lesquels sont réalisés par exemple sous la forme de creux (49, 149).

12. Dispositif d'étanchement et de positionnement (40, 140) selon l'une des revendications 6 à 11, **caractérisé par** un film adhésif (54, 145) appliqué sur le dessous (50, 150) de celui-ci.

13. Dispositif d'étanchement et de positionnement (40, 140) selon l'une des revendications 6 à 12, **caractérisé en ce qu'**il est fabriqué à partir d'un matériau transparent, tel par exemple du C-PET ou PMMA.

14. Dispositif d'étanchement et de positionnement (40, 140) selon l'une des revendications 6 à 13, **caractérisé par** un dispositif de capteur (120) monté sur le dessus au niveau de la sortie de l'ouverture de sortie (44, 144), lequel est réalisé pour détecter du fluide de remplissage (15) traversant l'ouverture de sortie (44, 144) et est réalisé par exemple en tant que dispositif de barrière lumineuse (122).

15. Jeu d'outils d'aide au montage pour l'utilisation dans un procédé ou système pour la fabrication d'un dispositif de produit de panneau (10), où un produit intermédiaire de panneau (11) est prévu avec au moins un évidement (12), formé dans la surface de panneau (13), avec une délimitation (14) et au moins un élément d'insertion (20) prévu pour l'ancrage dans au moins l'un des évidements (12), dans lequel l'élément d'insertion (20) est inséré de manière automatisée dans l'évidement (12) du produit intermédiaire de panneau (11) et un interstice (16) entre l'élément d'insertion (20) et la délimitation (14) de l'évidement (12) est rempli de manière automatisée avec un fluide de remplissage durcissable ou durcissant (15), **caractérisé par** :
- un dispositif d'étanchement et de positionnement (40, 140) selon l'une des revendications 6-14, et
- un dispositif de liaison (60, 62) pour la liaison détachable entre le dispositif d'étanchement et de positionnement (40, 140) et l'élément d'insertion (20).
